# EUROPEAN PATENT SPECIFICATION

(11) **EP 4 431 444 B1**
(45) Date of publication and mention of the grant of the patent: **31.12.2025**
(21) Application number: 23162641.7
(22) Date of filing: 17.03.2023
(51) Int. Cl.: B66F 9/06, B62D 53/00, B62D 47/00, B62D 61/12, B62D 63/02

(54) **SELF PROPELLED GUIDE UNIT, SELF PROPELLED LOAD BEARING UNIT AND SYSTEM**
SELBSTGETRIEBENES FÜHRUNGSFAHRZEUG, SELBSTGETRIEBENES LASTTRAGENDENFAHRZEUG UND SYSTEM
UNITÉ DE GUIDAGE AUTOPROPULSÉE, UNITÉ DE PORTE-CHARGE AUTOPROPULSÉE ET SYSTÈME

(43) Date of publication of application: 18.09.2024
(73) Proprietor: FQ IP AB, 431 53 Mölndal (SE)
(72) Inventor: Augustsson, Per, 431 53 MÖLNDAL (SE)
(74) Representative: AWA Sweden AB

(56) References cited:
- WO-A1-2020/089170
- WO-A1-2022/129036

## Description

### Field of the invention

This invention relates to a self-propelled guide unit as well as a self-propelled load bearing unit and a system comprising such units.

### Background art

All forms of handling of goods, material or items of manufacturing requires intralogistics, i.e. logistics within some confined area such as a factory, warehouse or yard. Traditionally, forklifts have been the dominating vehicle both for transporting pallets of smaller items and larger items individually. Forklifts however have some limitations and are being replaced in many environments by manual carts pushed by human workers. The carts are less likely to cause accidents and are much more adaptable to specific uses or sizes of the transported items. However, the manual carts also have drawbacks, such as limitations of the maximum load capacity that a human operator can handle, and in that the logistic system becomes relatively labour intensive. Also, the carts are sometimes incompatible with logistic systems which are based on pallets and forklifts.

WO 2022/129036 discloses a guiding vehicle configured to connect to a self-propelled load bearing cart by a mechanical connector, such that the guiding vehicle can control the self-propelled load bearing cart to travel on a floor surface.

### Summary

It is an object to mitigate, alleviate or eliminate one or more of the above-identified deficiencies in the art and disadvantages singly or in any combination.

Accordingly, there is provided a self-propelled guide unit according to claim 1, which is configured to connect to and guide a self-propelled load bearing unit, such that the self-propelled load bearing unit can travel on a floor surface when the self-propelled guide unit and the self-propelled load bearing unit are connected. The self-propelled guide unit being configured to receive at least one parameter from the self-propelled load bearing unit, use the at least one parameter in the generation of a control signal, and transmit the generated control signal to the self-propelled load bearing unit for controlling the propulsion of the self-propelled load bearing unit. The self-propelled guide unit comprises at least one engaging element configured to engage at least one corresponding engaging element on the self-propelled load bearing unit, and an actuator configured to lift the self-propelled guide unit from the floor surface by actuating the at least one engaging element. The actuator is configured to move the at least one engaging element in a direction towards the floor surface, such that the at least one engaging element engages the at least one engaging element on the self-propelled load bearing unit. The at least one engaging element carries a major portion of the weight of the self-propelled guide unit, when the self-propelled guide unit is lifted from the floor surface.

By having the actuator moving the at least one engaging element in a direction towards the floor surface the engaging elements of the self-propelled guide unit can vertically engage the engaging elements of the self-propelled load bearing unit such that gravity can assist in aligning and stabilizing the self-propelled guide unit during connection.

The direction towards the floor surface, may be a strictly vertical or a substantially vertical or angled direction being mainly a vertical direction.

In some embodiments, the at least one engaging element on the self-propelled guide unit comprises a recess or protrusion configured to engage a corresponding recess or protrusion on the self-propelled load bearing unit.

In some embodiments, the at least one engaging element on the self-propelled guide unit comprises a protrusion configured to engage a corresponding recess on the self-propelled load bearing unit.

In some embodiments, the at least one engaging element on the self-propelled guide unit is configured to stabilize the self-propelled guide unit in at least a first and second direction, wherein the first and second directions are perpendicular to the direction towards the floor surface, and opposite to each other.

In some embodiments, the self-propelled guide unit comprises at least two engaging elements being spaced apart.

In some embodiments, a floor contacting plane is defined by wheel portions of the self-propelled guide unit configured to engage the floor surface when the self-propelled guide unit travels on the floor surface, and the at least two engaging elements are horizontally spaced apart in a direction parallel to the floor contacting plane.

In some embodiments, at least two engaging elements are horizontally aligned on a common axis parallel to the floor contacting plane.

In some embodiments, the self-propelled guide unit is configured to engage the self-propelled load bearing unit along an engagement axis, for positioning the self-propelled guide unit relative to the self-propelled load bearing unit in a position enabling the connection between the self-propelled guide unit and the self-propelled load bearing unit, wherein the self-propelled guide unit has a maximum width at the widest portion of the self-propelled guide unit, in a horizontal direction perpendicular to the engagement axis, and wherein, the at least two engaging elements are spaced apart with a distance exceeding 20% of the maximum width.

In some embodiments, the at least two engaging elements are spaced apart with a distance exceeding 40% of the maximum width.

In some embodiments, the self-propelled guide unit comprises at least two wheels, and wherein a maximum wheel-base distance is the largest distance between the distal portions of two wheels of the self-propelled guide unit, and wherein, the at least two engaging elements are spaced apart with a distance exceeding 20% of the maximum wheel-base distance.

In some embodiments, the at least two engaging elements are spaced apart with a distance exceeding 40% of the maximum wheel-base distance.

**The** floor contacting plane is defined by wheel portions of the self-propelled guide unit configured to engage the floor surface when the self-propelled guide unit travels on the floor surface, and the at least two engaging elements are vertically spaced apart in a direction perpendicular to the floor contacting plane.

In some embodiments, the at least two engaging elements are vertically aligned on a common axis parallel to the floor contacting plane.

In some embodiments, the self-propelled guide unit is configured to engage the self-propelled load bearing unit along an engagement axis, for positioning the self-propelled guide unit relative to the self-propelled load bearing unit in a position enabling the connection between the self-propelled guide unit and the self-propelled load bearing unit, and wherein the self-propelled guide unit has a maximum height at the tallest portion of the self-propelled guide unit, in a vertical direction perpendicular to the engagement axis, and wherein the at least two engaging elements are vertically spaced apart with a distance exceeding 20% of the maximum height.

In some embodiments, the self-propelled guide unit is configured to engage the self-propelled load bearing unit along an engagement axis, for positioning the self-propelled guide unit relative to the self-propelled load bearing unit in a position enabling the connection between the self-propelled guide unit and the self-propelled load bearing unit, and wherein the self-propelled guide unit has an average height relative to the footprint of the self-propelled guide unit, in a vertical direction perpendicular to the engagement axis, and wherein the at least two engaging elements are vertically spaced apart with a distance exceeding 10% of the average height.

In some embodiments, the self-propelled guide unit is configured to engage the self-propelled load bearing unit along an engagement axis, for positioning the self-propelled guide unit relative to the self-propelled load bearing unit in a position enabling the connection between the self-propelled guide unit and the self-propelled load bearing unit, wherein the at least one engaging element on the self-propelled guide unit is configured to stabilize the self-propelled guide unit in at least a first and second direction, wherein the first and second directions are paralell to the engagement axis, and opposite to each other.

In some embodiments, the self-propelled guide unit comprises at least four engaging elements, and wherein at least two of the four engaging elements are vertically spaced apart and at least two of the four engaging elements are horizontally spaced apart.

In some embodiments, the at least one engaging element is positioned vertically above the center of gravity of the self-propelled guide unit, when the self-propelled guide unit travels on the floor surface.

In some embodiments, the at least one engaging element has an average vertical distance from the floor contacting plane, and wherein the actuator withholds force from a position having a longer vertical distance from the floor contacting plane than the average vertical distance.

The self-propelled guide unit may comprise a first electrical connector configured to connect to a second electrical connector comprised by the self-propelled load bearing unit, wherein the first electrical connector is configured to be moved by the actuator.

In some embodiments, the first electrical connector is configured to be moved to connect to the second electrical connector by the actuator after the actuator has moved the at least one engaging element.

In some embodiments, the first electrical connector is configured to be moved, relative to the second electrical connector, by the actuator in a direction opposite to the direction towards the floor surface.

There is further provided a self-propelled load bearing unit according to claim 10, which is configured to connect to and be guided by a self-propelled guide unit, such that the self-propelled load bearing unit can travel on a floor surface when the self-propelled guide unit and the self-propelled load bearing unit are connected. The self-propelled load bearing unit being configured to transmit at least one parameter to the self-propelled load bearing unit, and receive a control signal based on the at least one parameter from the self-propelled load bearing unit for controlling the propulsion of the self-propelled load bearing unit. The self-propelled load bearing unit comprises at least two spaced-apart engaging elements configured to engage at least two engaging elements on the self-propelled guide unit. At least one of the at least two spaced-apart engaging elements may be positioned vertically above the center of gravity of the self-propelled load bearing unit, when the self-propelled load bearing unit travels on the floor surface, and the at least two engaging elements carries a major portion of the weight of the self-propelled guide unit, when the self-propelled guide unit is connected to the self-propelled load bearing unit.

By having the engaging elements positioned vertically above the center of gravity of the self-propelled load bearing unit, when the self-propelled load bearing unit travels on the floor surface, a more stable fixation of the self-propelled guide unit is created as the self-propelled guide unit hangs on the engaging elements. The engaging elements being spaced-apart horizontally creates stability in the side-to-side direction when the self-propelled guide unit is lifted from the floor surface and hangs on the self-propelled load bearing unit by the connection between the self-propelled guide unit and the self-propelled load bearing unit.

In some embodiments, the at least one engaging element on the self-propelled load bearing unit comprises a recess or protrusion configured to engage a corresponding recess or protrusion on the self-propelled guide unit.

In some embodiments, the at least one engaging element on the self-propelled load bearing unit comprises a recess configured to engage a corresponding protrusion on the self-propelled guide unit.

A floor contacting plane is defined by wheel portions of the self-propelled load bearing unit configured to engage the floor surface when the self-propelled load bearing unit travels on the floor surface, and the at least two engaging elements may be horizontally spaced apart in a direction parallel to the floor contacting plane.

In some embodiments, at least two of the engaging elements are horizontally aligned on a common axis parallel to the floor contacting plane.

In some embodiments, the self-propelled load bearing unit is configured to engage the self-propelled guide unit along an engagement axis, for positioning the self-propelled guide unit relative to the self-propelled load bearing unit in a position enabling the connection between the self-propelled guide unit and the self-propelled load bearing unit, and wherein the at least two engaging elements are spaced-apart in a horizontal direction perpendicular to the engagement axis with a distance exceeding 10cm or exceeding 20cm.

A floor contacting plane is defined by wheel portions of the self-propelled load bearing unit configured to engage the floor surface when the self-propelled load bearing unit travels on the floor surface, and the at least two engaging elements are vertically spaced apart in a direction perpendicular to the floor contacting plane.

In some embodiments, least two of the engaging elements are vertically aligned on a common axis parallel to the floor contacting plane.

In some embodiments, the self-propelled load bearing unit is configured to engage the self-propelled guide unit along an engagement axis, for positioning the self-propelled guide unit relative to the self-propelled load bearing unit in a position enabling the connection between the self-propelled guide unit and the self-propelled load bearing unit, and wherein the at least two engaging elements are spaced-apart in a vertical direction perpendicular to the engagement axis with a distance exceeding 10cm or exceeding 20cm.

In some embodiments, the self-propelled load bearing unit comprises at least four engaging elements, and wherein at least two of the four engaging elements are vertically spaced apart and at least two of the four engaging elements are horizontally spaced apart.

The self-propelled load bearing unit may comprise a second electrical connector configured to connect to a first electrical connector comprised by the self-propelled guide unit, wherein the second electrical connector is substantially facing upwards when the self-propelled load bearing unit travels on the floor surface, enabling connection of the first and second electrical connector by vertical movement of the first electrcial connector.

The self-propelled load bearing unit may comprise a receiving portion configured to receive at least a portion of the self-propelled guide unit, such that the receiving portion encloses three sides of at least the portion of the self-propelled guide unit.

In some embodiments, the receiving portion is configured to receive at least the portion of the self-propelled guide unit along a receival axis, and wherein the receiving portion is configured to receive at least 1/5 of the length of the self-propelled guide unit in the direction of the receival axis.

In some embodiments, the receiving portion comprises an entry portion, and wherein the entry portion comprises at least one rounded or chamfered surface acting as a guide for the self-propelled guide unit to enter the receiving portion.

The self-propelled load bearing unit may comprise a mechanical guide element configured to guide the self-propelled guide unit to enter the receiving portion.

In some embodiments, the mechanical guide element is at least two mechanical guide elements configured to engage two opposite sides of the self-propelled guide unit with two opposite sides of the receiving portion for guiding the self-propelled guide unit to enter the receiving portion.

In some embodiments, the at least two mechanical guide elements are comprised by the self-propelled guide unit.

There is further provided a system for intralogistics comprising a self-propelled guide unit according to any one of claims 1 to 9 and a self-propelled load bearing unit, according to any one of claims 10 to 14.

Thereby the present invention provides a system for intralogistics with an improved functionality of autonomous or remote controlled connection between units in the system.

### Brief descriptions of the drawings

The invention will by way of example be described in more detail with reference to the appended schematic drawings, on which:
Figure 1A - 1B shows a self-propelled guide unit in the process of engaging with and connected to a self-propelled load bearing unit in an elevated view.
Figure 2 shows a self-propelled guide unit for an intralogistics system in an elevated perspective view.
Figure 3 shows a self-propelled load bearing unit for an intralogistics system in an elevated view.
Figure 4A - 4C shows a zoomed partial cross-sectional view of a connection system for connecting a self-propelled guide unit to a self-propelled load bearing unit, in 3 steps (fig. 4A - 4C, respectivly) of engagement according to an embodiment of a connection process.
Figure 5A - 5B shows a male and female electrical connector according to the disclosure, respectivly.
Figure 5C shows the male electrical connector from the embodiment of fig. 5A shown from a different angle.
Figure 6 shows a partially internal view of the mechanics of a self-propelled guide unit for an intralogistics system in an elevated view.
Figure 7 shows a partially internal view of the mechanics of a self-propelled load bearing unit for an intralogistics system in an elevated view.

### Detailed description

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided for thoroughness and completeness.

A logistic system using self-propelled guide units for moving self-propelled load bearing units is provided, as well as self-propelled load bearing units for moving loads in such a system and self-propelled guide units guiding and controlling the self-propelled load bearing units in the system. The logistics system may be used in an intralogistics system in which material, goods or items need to be transported in an efficient and/or autonomous way. Intralogistics systems could be systems in manufacturing industry or warehouse facilities. Some of the advantages with the system is that the self-propelled guide units can be made relatively light and small, enabling the self-propelled guide units to travel relatively fast and with relatively low risk to human operators in an indoor environment. The small size enables the self-propelled guide units to travel in narrow passages and enter into cramped spaces which enables optimization of e.g. a factory or warehouse layout. That the self-propelled guide units can be made small, fast and safe is enabled by the idea that the self-propelled guide units only need to propel their own weight. I.e., the self-propelled guide units are not made to lift or tug any load, they are made to connect to, control and guide self-propelled load bearing units. After connection with the self-propelled load bearing units, the self-propelled guide unit shown in the embodiment of the drawings lifts itself by means of an actuator on the self-propelled guide unit such that the entire weight of the self-propelled guide units is carried by the self-propelled load bearing unit. The self-propelled load bearing unit comprises means for propulsion of the self-propelled load bearing unit, the self-propelled guide unit and the load placed on, or pulled by, the self-propelled load bearing unit. The means for propulsion typically comprises electrical motors connected to drive wheels of the self-propelled load bearing unit and motor controller configured to control the motors based on control signals that the self-propelled load bearing unit receives from the self-propelled guide unit. The self-propelled load bearing units may have on board batteries, but in the preferred embodiments, the self-propelled load bearing units are powered from batteries on the self-propelled guide unit. This is advantageous as the self-propelled load bearing unit do not have to be moved to a charging station and it further eliminates the risk that a load that needs to be moved sits on a self-propelled load bearing unit with depleted batteries. The self-propelled load bearing units can be made in an infinite number of different versions, all configured to fit with, be connected to, and be controlled by the self-propelled guide unit. Specifically, the self-propelled load bearing units can be made in different sizes and made to carry different weights and can be adapted to lift, push or pull the loads.

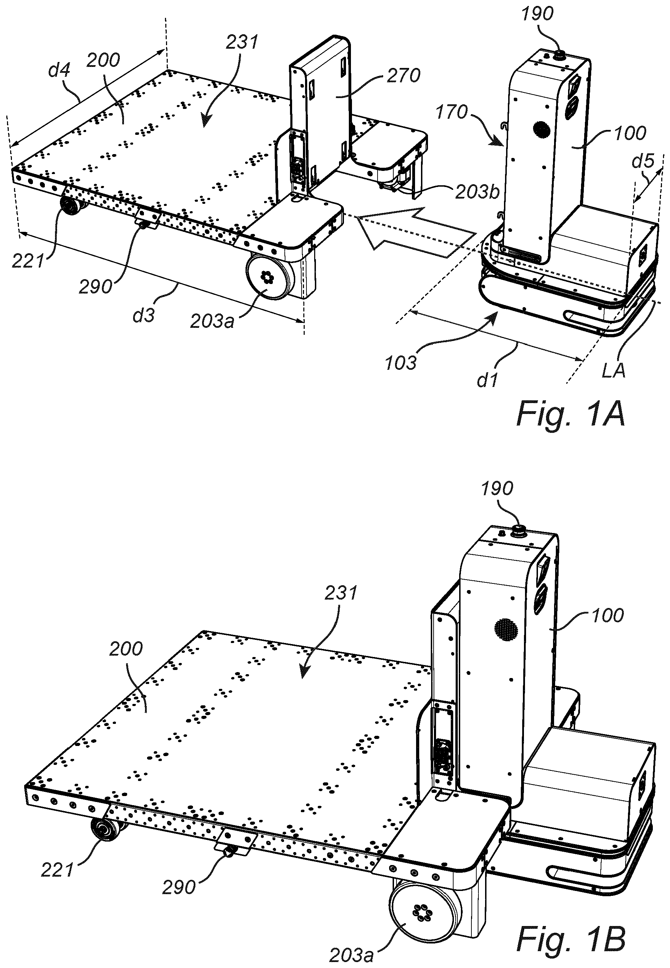

Fig. 1A shows an embodiment of a self-propelled guide unit 100 and self-propelled load bearing unit 200 for an intralogistics, when the self-propelled guide unit 100 is in the process of connecting to the self-propelled load bearing unit 200. The self-propelled guide unit 100 comprises a mechanical connector 170 configured to engage with and connect to a mechanical connector 270 of the self-propelled load bearing unit 200. The self-propelled guide unit 100 further comprises an electrical connector (not shown) for electrically connecting the self-propelled guide unit 100 to the self-propelled load bearing unit 200 for transferring power, sensor signals, control signals and information between the self-propelled guide unit 100 and the self-propelled load bearing unit 200. The self-propelled load bearing unit 200 comprises two drive wheels 203a, 203b in the rear of the self-propelled load bearing unit 200. Each of the drive wheels 203a, 203b is connected to an electrical motor for propelling the self-propelled load bearing unit 200. As each of the drive wheels 203a, 203b is connected to an electrical motor, the self-propelled load bearing unit 200 can turn by driving one of the motors faster than the other. The self-propelled load bearing unit 200 further comprises swiveling casters 221 placed underneath the load bearing surface 231 in the front portion of the self-propelled load bearing unit 200. In the embodiment shown in fig. 1A, the self-propelled load bearing unit 200 is configured to carry a load on a load bearing surface 231. The load could for example be a load placed on a pallet. The self-propelled guide unit 100 approaches the self-propelled load bearing unit 200 along an engagement axis LA and thereby aligns the mechanical connector 170 of the self-propelled guide unit 100 with the mechanical connector 270 of the self-propelled load bearing unit 200.

The self-propelled guide unit 100 comprises drive wheels 103 (not visible) for propelling the self-propelled guide unit 100 on a floor surface, and further comprises at least one additional wheel (not visible), e.g. in the form of a swiveling castor.

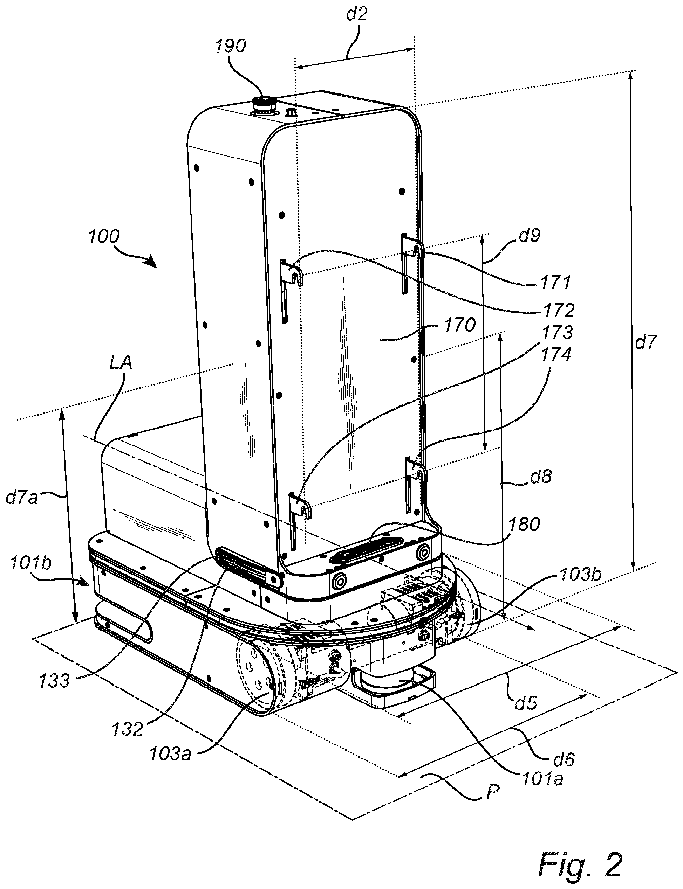

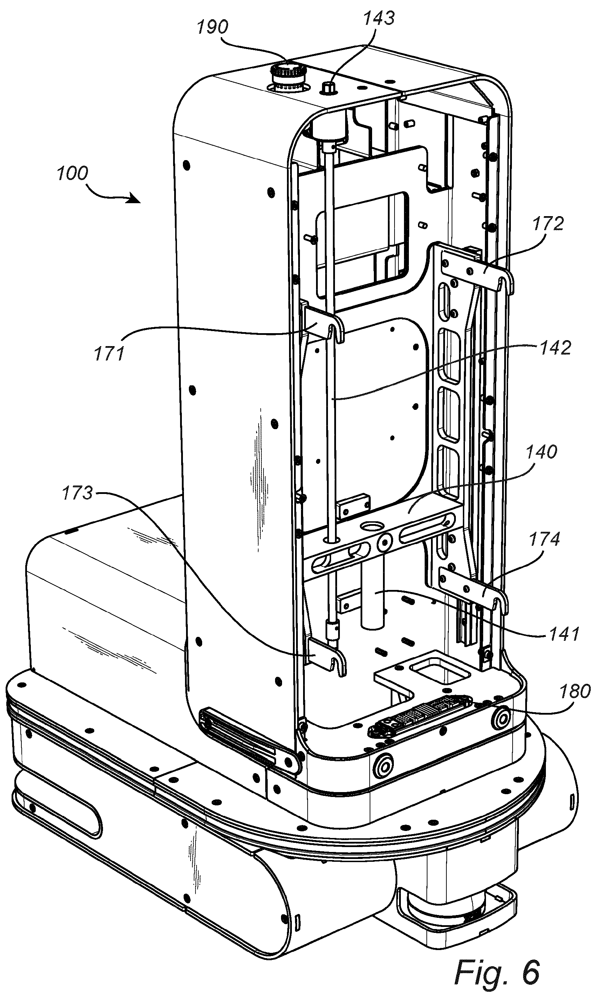

Fig. 1B shows the same embodiment of a self-propelled guide unit 100 and self-propelled load bearing unit 200 for an intralogistics as in fig. 1A, when the self-propelled guide unit 100 is connected to a self-propelled load bearing unit 200. As will be described in further detail with reference to figs. 2 - 5, the self-propelled guide unit 100 has approached the self-propelled load bearing unit 200 along the engagement axis (LA). The mechanical connector 170 of the self-propelled guide unit 100 has been engaged and connected to the mechanical connector 270 on the self-propelled load bearing unit 200. The self-propelled guide unit 100 has then lifted itself by means of an actuator (further described with reference to fig. 6) in the self-propelled guide unit 100 such that the weight of the self-propelled guide unit 100 is carried by the self-propelled load bearing unit 200 and the wheels of the self-propelled guide unit 100 have been lifted from the floor surface such that the wheels of the self-propelled guide unit 100 no longer engages the floor surface. The lifting of the self-propelled guide unit 100 relative to the self-propelled load bearing unit 200 has caused a first electrical connector on the self-propelled guide unit 100 to connect to a second electrical connector on the self-propelled load bearing unit 100 such that power, sensor signals, control signals and information can be transferred between the self-propelled guide unit 100 and the self-propelled load bearing unit 200. In this connected state, the self-propelled guide unit 100 receives sensor signals from the self-propelled load bearing unit 200 related to the movement of the drive wheels 203a, 203b of the self-propelled load bearing unit 100, such that the self-propelled guide unit 100 can use the movement of the drive wheels 203a, 203b when navigating the environment. The self-propelled guide unit 100 transmits control signals to the self-propelled load bearing unit 200 for controlling the propulsion of the self-propelled load bearing unit 200 by controlling the electrical motors of the self-propelled load bearing unit 200.

The self-propelled load bearing unit 200 further comprises an emergency stop button 290 which may be pushed by a human operator any time. When the emergency stop button 290 is pushed, an emergency stop signal is transmitted to the self-propelled guide unit 100 for stopping the self-propelled load bearing unit 200. The self-propelled guide unit 100 also has an emergency stop button 190.

In the embodiment shown in fig. 1B, all wheels of the self-propelled guide unit 100 are lifted from the floor surface when the self-propelled guide unit 100 and self-propelled load bearing unit 200 are fully connected, such that the entire self-propelled guide unit 100 is lifted from the floor surface. The weight of the self-propelled load bearing unit 200 is thus increased which increases the force creating the traction between the drive wheels 203a, 203b of the self-propelled load bearing unit 200 and the floor surface. When the self-propelled guide unit 100 is lifted from the floor surface, the self-propelled guide unit 100 is configured to receive information concerning the movement of a drive wheel 203a, 203b of the self-propelled load bearing unit 200 obtained from at least one motor of the self-propelled load bearing unit 200, or from at least one encoder connected to at least one of the drive wheels 203a, 203b of the self-propelled load bearing unit 200. Information concerning the movement of the at last one drive wheel 203a, 203b is preferably received from two drive wheels 203a, 203b of the self-propelled load bearing unit 200, such that turning, and drive pattern of the self-propelled load bearing unit 200 can be assessed. In the embodiments shown in the drawings, the self-propelled guide unit 100 is equipped with an actuator (further described with reference to fig. 6), such as a linear actuator, for lifting the self-propelled guide unit 100. However, in alternative embodiments, self-propelled load bearing units may be equipped with an actuator for lifting the self-propelled guide unit 100.

In the embodiment shown in the drawings, the self-propelled guide unit 100 is remote controlled and/or autonomous and is more competent, faster, and lighter than the self-propelled load bearing unit 200 but lack the load bearing capabilities or have load bearing capabilities that are less than 1/10 of the load bearing capabilities of the self-propelled load bearing unit 200. The self-propelled guide unit 100 has a smaller footprint than the self-propelled load bearing unit 200.

In the embodiment shown in the drawings, sophisticated, sensitive, and expensive components are excluded from the self-propelled load bearing unit 200, making the self-propelled load bearing unit 200 easier to manufacture, more robust and reduces the maintenance cost of the self-propelled load bearing unit 200. As the load bearing unit 200 is self-propelled, i.e., not pulled by the self-propelled guide unit 100, the self-propelled guide unit 100 can be made small, light and fast, making it possible to have the self-propelled guide unit 100 move about for example a factory setting without many of the risks to human operators that unavoidably are present when moving a large and heavy load bearing cart. It is also possible to have self-propelled guide units 100 coordinating a larger amount of self-propelled load bearing units 200. It is also possible to have one type of self-propelled guide unit 100 guiding and controlling a large variety of self-propelled load bearing units 200. In the embodiment shown in the figures, the self-propelled guide unit 100 is less than 50% of the footprint area of the self-propelled load bearing unit 200. The length d1 of the self-propelled guide unit 100 is less than 50% of the length d3 of the self-propelled load bearing unit 200, the width d5 of the self-propelled guide unit 100 is less than 50% of the width d4 of the self-propelled load bearing unit 200, the weight of the self-propelled guide unit 100 is less than 50% of the weight of the self-propelled load bearing unit 200, and the footprint of the self-propelled guide unit 100 is less than 50% of the footprint of the self-propelled load bearing unit 200. In alternative embodiments, the length and/or width and/or weight and/or footprint of the self-propelled guide unit 100 may be less than 30% of the length and/or width and/or weight and/or footprint of the self-propelled load bearing unit 200.

The self-propelled guide unit 100 has a top speed which is at least 200% of the top speed of the self-propelled load bearing unit 200, which means that the self-propelled guide unit 100 can move around in an environment, such as a factory, much quicker when not being connected to a self-propelled load bearing unit.

In the embodiment shown in the drawings, the self-propelled guide unit 100 has a weight in the range 50 - 200 kg, which means that that the motors of the self-propelled guide unit 100 only need to create torque sufficient for accelerating the self-propelled guide unit 100 with a weight in the range 50 - 200 kg and the breaks only need to be capable of deaccelerating the self-propelled guide unit 100 with a weight in the range 50 - 200 kg.

In contrast, the self-propelled load bearing unit 200 described with reference to the drawings are configured to carry a load in the range 300 - 2000 kg, which means that the motors of the self-propelled load bearing unit 200 need to create torque sufficient for accelerating the self-propelled load bearing unit 200 with a weight in the range 300 - 2000 kg and the breaks of the self-propelled load bearing unit 200 need to be capable of deaccelerating the self-propelled load bearing unit 200 with a weight in the range 300 - 2000 kg.

In one exemplifying embodiment, the combined motors for the propulsion of the self-propelled load bearing unit are configured for generating a maximum torque being 3 times the maximum torque of the combined motors for the propulsion of the self-propelled guide unit 100.

In another exemplifying embodiment, the combined motors for the propulsion of the self-propelled load bearing unit 200 is configured for generating a maximum torque being 6 times the maximum torque of the combined motors for the propulsion of the self-propelled guide unit 100.

Fig. 2 shows an isolated view of the self-propelled guide unit 100 of the embodiment in figs. 1A and 1B. The self-propelled guide unit 100 is configured to connect to and guide a self-propelled load bearing unit (200), such that the self-propelled load bearing unit can travel on a floor surface when the self-propelled guide unit 100 and the self-propelled load bearing unit are connected. The self-propelled guide unit 100 is configured to receive at least one parameter from the self-propelled load bearing unit and use the at least one parameter in the generation of control signals that are transmitted to the self-propelled load bearing unit for controlling the propulsion of the self-propelled load bearing unit.

In the embodiment shown in fig. 2, the self-propelled guide unit 100 comprises four engaging elements 171 - 174 configured to engage corresponding engaging elements (271 - 274) on the self-propelled load bearing unit. The engaging elements 171 - 174 are connected to and operated by an actuator (further described with reference to fig. 6). The actuator is configured to actuate the engaging elements 171 - 174 for moving the engagement elements 171 - 174 downwards, lifting the self-propelled guide unit 100 from the floor surface by the engagement between the engagement elements 171 - 174 on the self-propelled guide unit 100 and the corresponding engagement elements on the self-propelled load bearing unit. In the embodiment shown in fig. 2, the actuator is configured to move the engaging elements 171 - 714 in a strict vertical direction towards the floor surface, i.e. a direction being a normal to the plane of the floor surface. As such, the engaging elements 171 - 174 carries a major portion of the weight of the self-propelled guide unit 100, when the self-propelled guide unit 100 is lifted from the floor surface. However, in alternative embodiments, the actuator may be configured to move the engaging elements at an angle relative to the normal of the plane of the floor surface, such that the self-propelled guide unit 100 may be lifted at an angle, e.g. an angle in range 0° - 45° from relative to the normal of the plane of the floor surface. In such an embodiment, the lifting of the self-propelled guide unit 100 may be guided by an inclined plane connected to the self-propelled load bearing unit for supporting the lifting of the self-propelled guide unit 100.

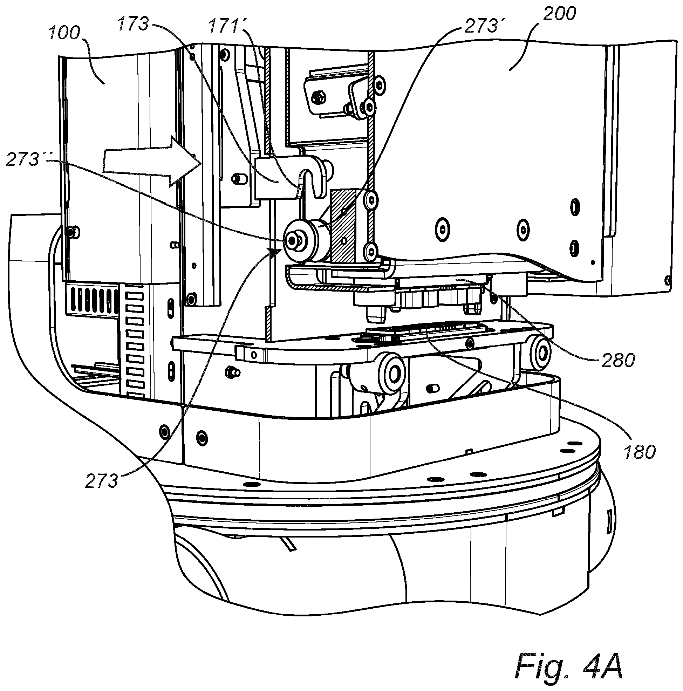

In the embodiment shown in fig. 2, the engaging elements 171 - 174 on the self-propelled guide unit 100 comprises a protrusion in the form of hooks 171 - 174 configured to engage corresponding recesses comprising shafts suitable for engagement with the hooks 171 - 174. The hooks 171 - 174 and the shafts for engagement are described in further detail with reference to figs. 4A - 4C. The hooks 171 - 174 are configured to stabilize the self-propelled guide unit 100 in at least a first, second and third direction. The self-propelled guide unit 100 is configured to engage the self-propelled load bearing unit along an engagement axis LA, for positioning the self-propelled guide unit 100 relative to the self-propelled load bearing unit in a position enabling the connection between the self-propelled guide unit 100 and the self-propelled load bearing unit. The engagement axis LA being the axis along which the self-propelled guide unit 100 travels in the final stages before engaging with the self-propelled load bearing unit. The engagement axis LA is parallel to the plane of the floor surface and thus perpendicular to the normal of the plane of the floor surface (perpendicular to the vertical direction towards the floor surface). The hooks 171 - 174 are configured to stabilize the self-propelled guide unit 100 in a first direction, being a direction of the engagement axis LA (the direction of protrusion of the hooks 171 - 174), a second direction being the direction opposite to the engagement axis LA, and a third direction being the direction of the normal to the plane of the floor surface, i.e. the direction supporting the wight from the self-propelled guide unit 100 when the self-propelled guide unit 100 has been lifted from the floor surface.

In the embodiment shown in fig. 2, the first hook 171 and the second hook 172 are horizontally aligned and horizontally spaced-apart, the third hook 173 and the fourth hook 174 are horizontally aligned and horizontally spaced-apart, the second hook 172 and the third hook 173 are vertically aligned and vertically spaced-apart, and the first hook 171 and the fourth hook 174 are vertically aligned and vertically spaced-apart. The plane of the floor surface coincides with a floor contacting plane **P**, which is defined by wheel portions of the self-propelled guide unit 100 configured to engage the floor surface when the self-propelled guide unit 100 travels on the floor surface. I.e., the plane **P** being the plane that the wheels abut when the self-propelled guide unit 100 travels on the floor surface. The first and second hooks 171, 172, and the third and fourth hooks 173, 174, are horizontally aligned and spaced-apart on a common axis parallel to the floor contacting plane **P**.

The self-propelled guide unit 100 has a maximum width d5 at the widest portion of the self-propelled guide unit 100, in a horizontal direction perpendicular to the engagement axis LA. In the embodiment shown in fig. 2, the first and second hooks 171, 172, and the third and fourth hooks 173, 174, are horizontally spaced-apart with a distance d2 exceeding 20% of the maximum width d5, more specifically exceeding 30% of the maximum width d5, more specifically exceeding 40% of the maximum width d5, more specifically exceeding 50% of the maximum width d5.

In the embodiment shown in fig. 2, the self-propelled guide unit 100 comprises two frontal wheels 103a, 103b. The two wheels 103a, 103b has a maximum wheel-base distance d6, which is the largest distance between the distal portions of the two frontal wheels 103a, 103b of the self-propelled guide unit 100. In the embodiment shown in fig. 2, the first and second hooks 171, 172, and the third and fourth hooks 173, 174, are horizontally spaced-apart with a distance d2 exceeding 20% of the maximum wheel-base distance d6, more specifically exceeding 30% of the maximum wheel-base distance d6, more specifically exceeding 40% of the maximum wheel-base distance d6, more specifically exceeding 50% of the maximum wheel-base distance d6.

In the embodiment shown in fig. 2, the first and fourth hooks 171, 174, and the second and third hooks 172, 173, are vertically aligned on a common axis parallel to the floor contacting plane **P**, and spaced-apart in a direction perpendicular to the floor contacting plane **P**.

In the embodiment shown in fig. 2, the self-propelled guide unit 100 has a maximum height d7 at the tallest portion of the self-propelled guide unit 100, in a vertical direction normal to the floor contacting plane **P** and perpendicular to the engagement axis LA. In the embodiment shown in fig. 2, the first and fourth hooks 171, 174, and the second and third hooks 172, 173, are vertically spaced-apart with a distance exceeding 20% of the maximum height d7, more specifically exceeding 30% of the maximum height d7, more specifically exceeding 40% of the maximum height d7.

In the embodiment shown in fig. 2, the self-propelled guide unit 100 further has an average height d7a relative to the footprint of the self-propelled guide unit 100, in a vertical direction perpendicular to the engagement axis LA, i.e., being the average of all heights of the footprint of the self-propelled guide unit 100. In the embodiment shown in fig. 2, the first and fourth hooks 171, 174, and the second and third hooks 172, 173 are vertically spaced-apart with a distance d9 exceeding 10% of the average height.

In the embodiment shown in fig. 2, the first and fourth hooks 171, 174, and the second and third hooks 172, 173 are vertically spaced-apart with a distance d9 exceeding 10cm, more specifically exceeding 20cm and even more specifically exceeding 30cm.

In the embodiment shown in fig. 2, the first and second hooks 171, 172, and the third and fourth hooks 173, 174 are horizontally spaced-apart with a distance exceeding 10cm, more specifically exceeding 20cm.

The engaging elements or hooks 171 - 174 being spaced-apart horizontally creates stability in the side-to-side direction when the self-propelled guide unit 100 is lifted from the floor surface and hangs on the self-propelled load bearing unit by the connection between the self-propelled guide unit 100 and the self-propelled load bearing unit. The engaging elements or hooks 171 - 174 being spaced-apart vertically creates stability in a front-to-back direction, i.e. the direction of the engagement axis LA, when the self-propelled guide unit 100 is lifted from the floor surface and hangs on the self-propelled load bearing unit by the connection between the self-propelled guide unit 100 and the self-propelled load bearing unit.

In the embodiment shown in fig. 2, the engaging elements or hooks 171 - 174 protrudes within the foot-print lower portion of the self-propelled guide unit 100, such that the engaging elements or hooks 171 - 174 do not protrude from the self-propelled guide unit 100 in a way that risks injuring people in the vicinity of the self-propelled guide unit 100.

In the embodiment shown in fig. 2, all of the engaging elements or hooks 171 - 174 are positioned vertically above the center of gravity of the self-propelled guide unit 100, when the self-propelled guide unit 100 travels on the floor surface. This creates a more stable fixation of the self-propelled guide unit 100 as the self-propelled guide unit 100 hangs on the hooks 171 - 174 with a majority of the weight below the engagement between the self-propelled guide unit 100 and the self-propelled load bearing unit, which means that gravity stabilizes the self-propelled guide unit 100. It is however conceivable in other embodiments that one or two engagement elements are positioned vertically above the center of gravity of the self-propelled guide unit 100 and one or two engagement elements are positioned vertically below the center of gravity of the self-propelled guide unit.

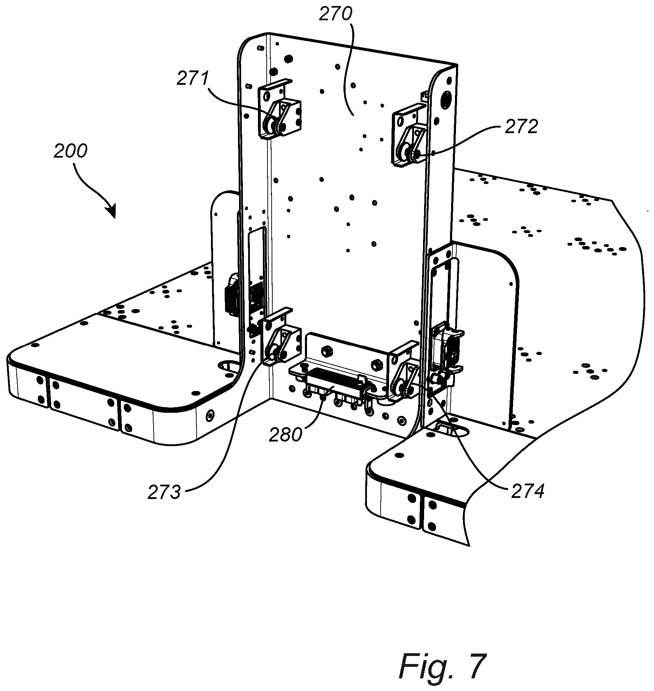

In the embodiment shown in fig. 2, the four engaging elements or hooks 171 - 174 has an average vertical distance d8 from the floor contacting plane **P.** The actuator (further described with reference to fig. 7) withholds force from a position having a longer vertical distance from the floor contacting plane **P** than the average vertical distance d8.

The self-propelled guide unit 100 further comprises an electrical connector 180 for electrically connecting the self-propelled guide unit 100 to the self-propelled load bearing unit such that sensor signals and ID-information can be transferred from the self-propelled load bearing unit to the self-propelled guide unit 100 and control signals can be transferred from the self-propelled guide unit 100 to the self-propelled load bearing unit. The electrical connector 180 is configured to be moved by the actuator by the relative displacement between the engaging elements 171 - 174 and the electrical connector 180. I.e., when the engaging elements 171-174 are moved downwards, the self-propelled guide unit 100 is lifted from the floor surface and upwards, which means that the electrical connector 180 is also lifted upwards. As the connecting interface of the electrical connector 180 is facing upwards, the electrical connector 180 can connect to a second electrical connector on the self-propelled load bearing unit having a corresponding connecting interface facing downwards when the self-propelled load bearing unit travels on the floor surface, by vertical movement of the first electrical connector 180. As the engaging elements 171 - 174 first needs to engage with the corresponding engaging elements on the load bearing unit, the actuator will first move the engaging elements 171 - 174 into engagement before the actuator starts lifting the self-propelled guide unit 100. The process of moving the engaging elements 171 - 174 into engagement will position the engaging elements 171 - 174 of the self-propelled guide unit 100 in a specific pre-defined position relative to the self-propelled load bearing unit. This aligns the electrical connector 180 with the second electrical connector on the self-propelled load bearing unit 200 and consequently the electrical connector 180 is configured to be moved by the actuator to connect to the second electrical connector, after the actuator has moved engaging elements 171 - 174. As the electrical connector moves as a consequence of the movement of the engaging elements 171 - 174, the electrical connector will move in a direction opposite to the direction towards the floor surface that the engaging elements 171 - 174 moves in. The electrical connector 180 comprises a plurality of recesses or protrusions for creating multiple electrical connections between the self-propelled guide unit 100 and the self-propelled load bearing unit for transferring power and/or control signals. The electrical connector is further described with reference to figs. 4A - 4C.

The electrical connector 180 may also be adapted for powering equipment for handling the load placed on the self-propelled load bearing unit, such as electrical rollers for loading/unloading the load. In some embodiments, the electrical connector 180 may be configured for transferring electrical energy for the purpose of charging a battery on the self-propelled load bearing unit, from a battery on the self-propelled guide unit 100, or for the purpose of charging a battery on the self-propelled guide unit 100 from a charger or charging station connected to the electrical grid, or from a battery on the self-propelled load bearing unit or on another self-propelled guide unit 100.

In the embodiment shown in fig. 2, the two drive wheels 103a, 103b enables control in all directions on a planar surface by altering the rotational speed and/or direction of the drive wheels 103a, 103b. The drive wheels 103a, 103b are drive wheels 103a, 103b suitable for use in a warehouse or factory setting and may be drive wheels 103a, 103b suitable for use on a flat concrete floor. The drive wheels 103a, 103b are connected to rotary encoders, sensing the rotational speed of a particular drive wheel 103a, 103b. The information derived by the rotary encoders may be used to compare the rotational speed of a particular drive wheel 103a, 103b to the speed of other drive wheel(s) 103a, 103b or to the speed of a self-propelled load bearing unit. The information of the movement of the drive wheels 103a, 103b is used as navigation information, it is important that traction is maintained between the floor surface and the drive wheels 103 when the wheels of the self-propelled guide unit 100 engages the floor surface (i.e., when the self-propelled guide unit 100 does not hang on the self-propelled load bearing unit 100).

In the embodiment shown in fig. 2, the self-propelled guide unit 100 comprises a first frontal LIDAR 101a and at least a second, rear LIDAR 101b. The LIDARS 101a,101b are protected by a recessed in the body of the self-propelled guide unit 100 such that the body of the self-propelled guide unit 100 protects the LIDARS 101a, 101b. The LIDARS 101a, 101b create an image of the surroundings of the self-propelled guide unit 100 such that the self-propelled guide unit 100 can navigate and provide navigational information to, and control, a self-propelled load bearing unit. The LIDARS further helps the self-propelled guide unit 100 to position itself relative to the self-propelled load bearing unit for enabling connection between the self-propelled guide unit 100 and the self-propelled load bearing unit. Alternative sensors on the self-propelled guide unit 100 could be radar units, sonic sensor units and/or optical sensor units, IR or cameras using image recognition.

In the embodiment shown in fig. 2, the self-propelled guide unit 100 comprises mechanical guide elements 132, made from a resilient polymer material such as nylon. The mechanical guide elements 132 are configured to engage in the final positioning of the self-propelled guide unit 100 relative to the self-propelled load bearing unit. The mechanical guide elements 132 have an integrated inductive or magnetic sensor 133 configured to sense a positioning element on the self-propelled load bearing unit. The integrated inductive or magnetic sensor 133 is configured to send a signal to the control unit of the self-propelled guide unit 100 when the self-propelled guide unit 100 is properly positioned relative to the self-propelled load bearing unit, such that the connection between the engaging elements 171 - 174 of the self-propelled guide unit 100 and the engaging elements self-propelled load bearing unit can start.

The self-propelled guide unit 100 further comprises an on-board computer configured to handle all calculations and input/output of sensor and control signals. The on-board computer comprises a transceiver configured to send and receive sensor and control signals to and from the self-propelled load bearing unit. Sensor signals could be data from a navigational sensor, such as a LIDAR located on the self-propelled guide unit 100, or possibly located on the self-propelled load bearing unit 200. Navigation data could also be information about the surroundings, such as a factory or warehouse layout, received by the self-propelled guide unit 100 from external sources, such as an external navigation sensor being stationary or mobile (such as a stationary LIDAR, IR-sensor or a LIDAR on another remote controlled or autonomous vehicle). Sensor signals could also be information concerning the movement of the drive wheels 103a, 103b of the self-propelled guide unit 100 and/or the drive wheels of the self-propelled load bearing unit. The information on the movement of the drive wheels 103a, 103b could preferably be obtained by an encoder connected to the drive wheels 103a, 103b. Sensor information could also be an emergency stop signal.

An emergency stop signal could for example be generated by an operator pushing an emergency stop button 190 located on the self-propelled guide unit 100 or on the self-propelled load bearing unit. The emergency stop signal may then be transferred by means of an electrical connection between the self-propelled load bearing unit and the self-propelled guide unit 100 such that the self-propelled guide unit 100 can control the propulsion of the self-propelled load bearing unit 200 for stopping the self-propelled load bearing unit 200.

The self-propelled guide unit 100 may further comprises a wireless communication unit configured to transmit and receive wireless communication to and/or from at least one of: a self-propelled load bearing unit, other self-propelled guide units or stationary wireless units being part of the logistic system. The wireless communication unit could be based on the IEEE 802.11 standard (WLAN or Wi-Fi) or UHF radio communication such as the IEEE 802.15.1 standard (Bluetooth) or a wireless communication unit based on the 3GPP NR standards (5G) enabling Ultra-Reliable Low-Latency Communications (URLLC). The wireless communication could be information or data e.g., relating to the identity of the self-propelled guide units 100 or the identity of the self-propelled load bearing units. The wireless communication between the self-propelled load bearing unit and the self-propelled guide unit 100 may be bidirectional, such that the self-propelled guide unit 100 may transmit and/or receive information from/to the self-propelled load bearing unit, which information could comprise, apart from identity information, specifics of the load on the self-propelled load bearing unit (weight, height etc.). It is further possible to transmit and/or receive more complex data such as navigation information such as driving instructions or information about the surroundings to or from the self-propelled guide unit 100.

The on-board computer of the self-propelled guide unit 100 is much more sophisticated than the computing unit of the self-propelled load bearing unit. The more sophisticated computing unit of the self-propelled guide unit 100 has a faster processing unit, a larger storage capacity, faster connection to other self-propelled guide units or to the logistics systems or to the self-propelled load bearing units. The computing unit of the self-propelled guide unit 100 further comprises more I/O-units than the computing unit of the self-propelled load bearing unit, enabling the self-propelled guide unit 100 to receive input from more sensors.

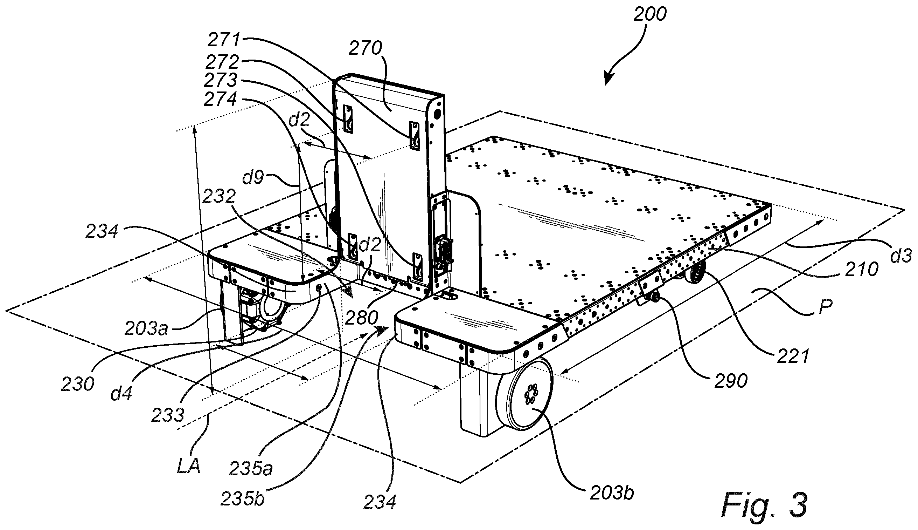

Fig. 3 shows an isolated view of a self-propelled load bearing unit 200 for an intralogistics system, the self-propelled load bearing unit 200 has two drive wheels 203a, 203b connected to electrical motors 230. The self-propelled load bearing unit 200 further comprises two swiveling castors 221, the swiveling castors 221 are fixated to support structures which in turn are fixated to the frame 210 of the self-propelled load bearing unit 200 by means of e.g., screws or other fastening means. The emergency stop button 290 is also fixated to the frame 210 of the self-propelled load bearing unit 200 and electrically connected to the self-propelled guide unit for transmitting an emergency stop signal from the emergency stop button 290 on the frame of the self-propelled load bearing unit 200 to the self-propelled guide unit such that the self-propelled guide unit can act on the emergency stop signal and control the propulsion of the self-propelled load bearing unit 200 accordingly.

The self-propelled load bearing unit 200 comprises a receiving portion 232 configured to receive a portion of the self-propelled guide unit, such that the receiving portion 232 encloses three sides of the portion of the self-propelled guide unit. The receiving portion 232 comprises the positioning element 233 configured to interact with the inductive or magnetic sensor (133) of the self-propelled guide unit. The receiving portion is configured to receive the portion of the self-propelled guide unit along the engagement axis LA. In the embodiment shown in fig. 3, the receiving portion 232 is configured to receive more than 1/5 of the length of the self-propelled guide unit in the direction of the engagement axis LA. The receiving portion 232 comprises an entry portion comprising mechanical guide element in the form or rounded or chamfered surfaces 234 guiding the self-propelled guide unit for facilitating the entry into the receiving portion 232.

In alternative embodiments, the mechanical guide elements (132 in fig. 2) may be placed on the two opposite sides 235A, 235B of the entry portion 232 for engaging with the sides of the self-propelled guide unit, instead of being placed on the sides of the self-propelled guide unit.

In the embodiment shown in fig. 3, the mechanical connector 270 of the self-propelled load bearing unit 200 comprises four engagement elements in the form of four recesses 271 - 274 for connection with the corresponding protrusions (171 - 174) of the self-propelled guide unit. The mechanical connector 270 is configured to enable the self-propelled guide unit to be connected to the self-propelled load bearing unit 200. The mechanical connector 270 is positioned in the front portion of the self-propelled load bearing unit 200 and facing rearwards such that the self-propelled guide unit 100 will be positioned substantially centrally in front of the self-propelled load bearing unit 200, when the self-propelled guide unit is connected to the self-propelled load bearing unit 200.

The mechanical connection 270 is configured to hold the weight of the self-propelled guide when it is lifted from the floor surface.

The self-propelled load bearing unit 200 further comprises an electrical connector 280 for electrically connecting the self-propelled load bearing unit 200 to the self-propelled guide unit such that sensor signals and ID-information can be transferred from the self-propelled load bearing unit 200 to the self-propelled guide unit and control signals can be transferred from the self-propelled guide unit to the self-propelled load bearing unit 200. The connecting interface of the electrical connector 280 is facing downwards, such that the electrical connector 280 can connect to an electrical connector (180) on the self-propelled guide unit having a corresponding connecting interface facing upwards by vertical movement of the electrical connector (180) of the self-propelled guide unit. As the engaging elements 271- 274 first needs to engage with the corresponding engaging elements on the self-propelled guide unit, the engaging elements 271 - 274 will first be in engagement with the corresponding engaging elements on the self-propelled guide unit before the electrical connector 280 is connected to the corresponding electrical connector on the self-propelled guide unit. The process of having the engaging elements 271 - 274 engage the engaging elements (171 - 174) of the self-propelled guide unit aligns the electrical connector 280 with the electrical connector on the self-propelled guide unit and consequently the electrical connector 280 is configured to be connected to the electrical connector on the self-propelled guide unit after the engaging elements 271 - 274 have been placed in engagement with the engaging elements (171 - 174) of the self-propelled guide unit.

The electrical connector 280 comprises a plurality of recesses or protrusions for creating multiple electrical connections between the self-propelled guide unit and the self-propelled load bearing unit 200 for transferring power and/or control signals.

The self-propelled load bearing unit 200 may further comprise a wireless transceiver, which may be a wireless communication unit, configured to transmit and receive wireless communication to and/or from a self-propelled guide unit and/or a mobile unit operated by a driver and/or a stationary wireless unit being part of a logistic system. The wireless communication could be information or data e.g. relating to driving or navigation of the self-propelled load bearing unit 200, or identity information or information with regards to the load on the self-propelled load bearing unit 200 (weight, height etc.).

The self-propelled load bearing unit 200 may be powered by the energy source of the self-propelled guide unit. However, in alternative embodiments the self-propelled load bearing unit 200 may have an energy source of its own which is used on its own or in combination with the energy source of the self-propelled guide unit. The energy source of the self-propelled load bearing unit 200 may be a smaller battery capable of powering the self-propelled load bearing unit 200 for short movements (such as short directly controlled movements by an operator). The energy source of the self-propelled load bearing unit 200 may be configured to be charged by and from the self-propelled guide unit by means of the electrical connection.

In alternative embodiments it is also conceivable that the self-propelled load bearing unit 200 comprises only a single drive wheel (not shown) which could be adapted for propulsion only, or for steering and propulsion. In embodiments in which a single drive wheel is adapted for steering and propulsion, the single drive wheel is turnable by means of for example a powered actuator. In embodiments in which the single drive wheel is configured for propulsion only, the self-propelled load bearing unit may be steered by the self-propelled guide unit.

In conceivable embodiments, the self-propelled load bearing unit 200 may also be used as part of a warehouse system, or as part of a station on an assembly line, which sometimes means that the self-propelled load bearing unit 200 will remain on the same spot for a long time, during which the batteries may be depleted. Having an energy source with sufficient energy in the self-propelled guide unit for powering the self-propelled load bearing unit 200 removes this problem as the self-propelled load bearing unit 200 can be easily energized by the batteries of the self-propelled guide unit.

In the embodiment shown in fig. 3, the self-propelled load bearing unit 200 comprises a computing unit configured to control the drive unit and thus the drive wheels 203a, 203b, handle input from sensors on the self-propelled load bearing unit 200 and for handling communication. Preferably, the computing unit on the self-propelled load bearing unit 200 is a much smaller and simpler computing unit than the computing unit of the self-propelled guide unit.

In the embodiment shown in fig. 3, the self-propelled guide unit 200 comprises four spaced-apart engaging elements 271 - 274 in the form or recesses configured to engage four engaging elements (171 - 174) on the self-propelled guide unit. In the embodiment shown in fig. 3, all four spaced-apart engaging elements 271 - 274 are positioned vertically above the center of gravity of the self-propelled load bearing unit 200, when the self-propelled load bearing unit travels on the floor surface and configured to carry a major portion of the weight of the self-propelled guide unit when the self-propelled guide unit is connected to the self-propelled load bearing unit 200. All four spaced-apart engaging elements 271 - 274 are further positioned vertically above the load bearing surface 231. A floor contacting plane **P** is defined by wheel portions of the self-propelled load bearing unit 200 configured to engage the floor surface when the self-propelled load bearing unit travels on the floor surface. The first and second engaging elements 271, 272 or recesses, are horizontally aligned on a common axis and horizontally spaced-apart in a direction parallel to the floor contacting plane **P**. The third and fourth engaging elements or recesses 271, 272 are horizontally aligned on a common axis and horizontally spaced-apart in a direction parallel to the floor contacting plane **P**. The first and third engaging elements or recesses 271, 273 are vertically aligned on a common axis and vertically spaced-apart in a direction perpendicular to the floor contacting plane **P** (in the direction of a normal to the floor contacting plane **P**). The second and fourth engaging elements 272, 274 or recesses are vertically aligned on a common axis and vertically spaced-apart in a direction perpendicular to the floor contacting plane **P** (in the direction of a normal to the floor contacting plane **P**).

In the embodiment shown in fig. 3, the first and third engaging elements 271, 273, and the second and fourth engaging elements 272, 274 are vertically spaced-apart with a distance d9 exceeding 10cm, more specifically exceeding 20cm and even more specifically exceeding 30cm in a direction perpendicular to the floor contacting plane **P**.

In the embodiment shown in fig. 3, the first and second engaging elements 271 and 272, and the third and fourth engaging elements 273, 274 are horizontally spaced-apart with a distance d2 exceeding 10cm, more specifically exceeding 20cm, in a direction parallel to the floor contacting plane **P.**

Figure 4A - 4C shows a detailed view of a partial cross-sectional view of the connection system for connecting the self-propelled guide unit 100 to the self-propelled load bearing unit 200 of the embodiments of figs. 1- 3. The self-propelled guide unit 100 comprises an engaging element 173 in the form of a hook configured to engage an engaging element 273 placed in a recess in the self-propelled load bearing unit 200. The engaging element 273 of the self-propelled load bearing unit 200 comprises a shaft 273" suitable for engagement with the hook 173, i.e. by the hook partially enclosing the shaft 273". The shaft 273" comprises two chamfered rollers 273' which are configured to function as a guide for horizontal alignment of the hooks, in a side-to-side direction. The hook 173 comprises chamfered surfaces 171' configured to engage the shaft 273" for positioning the hook relative to the shaft 273" in a front-to-back direction. As such, when the hook 173 has engaged the shaft 273", the hook 173 and the shaft 273" are in a specific pre-defined position. Fig. 4A shows the connecting system in the state in which the self-propelled guide unit 100 has been positioned in relation to the self-propelled load bearing unit 200 but the connecting operation between by the actuation of the hook 173 has not yet started.

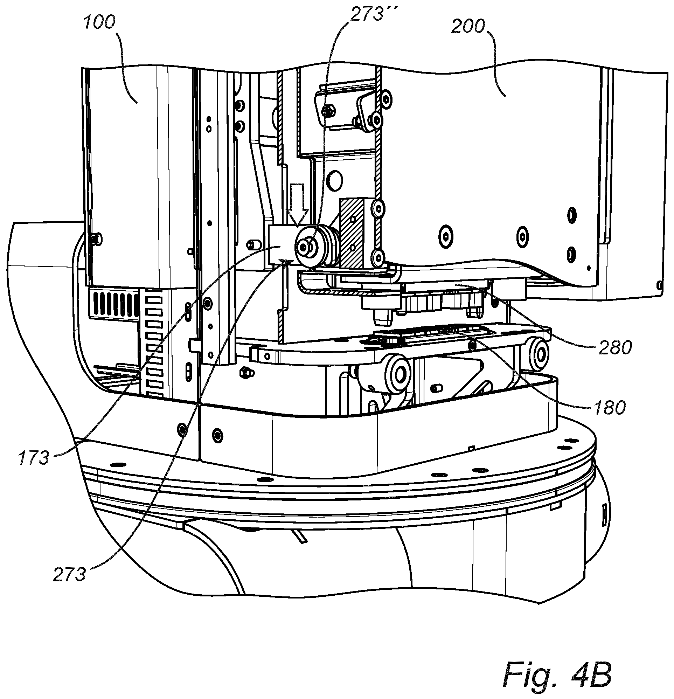

Fig. 4B shows the same view as in fig. 4A but in the state when the actuator has lowered the engaging element or hook 173 such that the hook partially encloses the shaft 273" of the engaging element of the self-propelled load bearing unit 200. The hook 173 is centered by the two chamfered rollers 273' such that the self-propelled guide unit 100 is positioned in a side-to-side direction and positioned by the chamfered surfaces 173' of the hook 173 in a front-to-back direction. In this state, the self-propelled guide unit 100 is positioned relative to the self-propelled load bearing unit 200, such that the final stage of the connection can be initiated. In this position, the electrical connector 180 of the self-propelled guide unit 100 is aligned with the electrical connector 280 of the self-propelled load bearing unit 200.

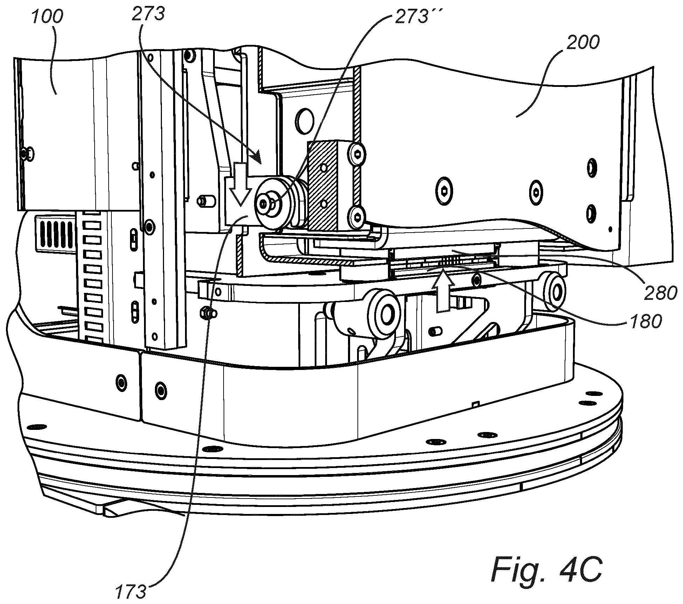

Fig. 4C shows the same view as in fig. 4A and 4B but in the state when the actuator has further lowered the engagement elements (e.g. the hook 173) of the self-propelled guide unit 100 such that the self-propelled guide unit 100 has been lifted from the floor surface into a position in which the self-propelled guide unit 100 hangs on the self-propelled load bearing unit 100. The lifting of the self-propelled guide unit 100 relative to the self-propelled load bearing unit 200 has caused the electrical connector 180 of the self-propelled guide unit 100 to engage and connect to the electrical connector 280 of the self-propelled load bearing unit 200. The self-propelled guide unit 100 is thus in this state electrically connected to the self-propelled load bearing unit 200 such that sensor signals and ID-information can be transferred from the self-propelled load bearing unit 200 to the self-propelled guide unit 100 and power and control signals can be transferred from the self-propelled guide unit 100 to the self-propelled load bearing unit 200.

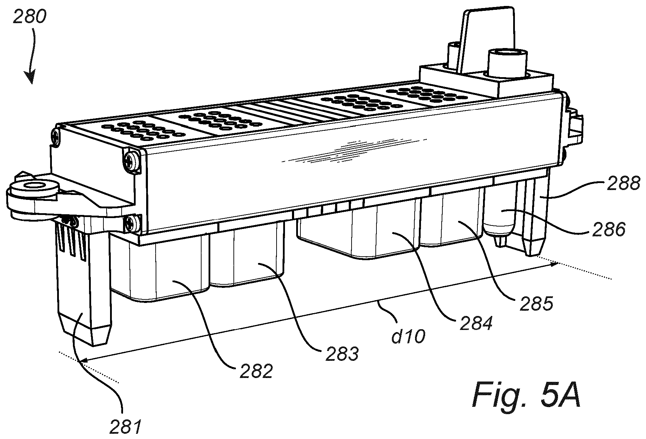

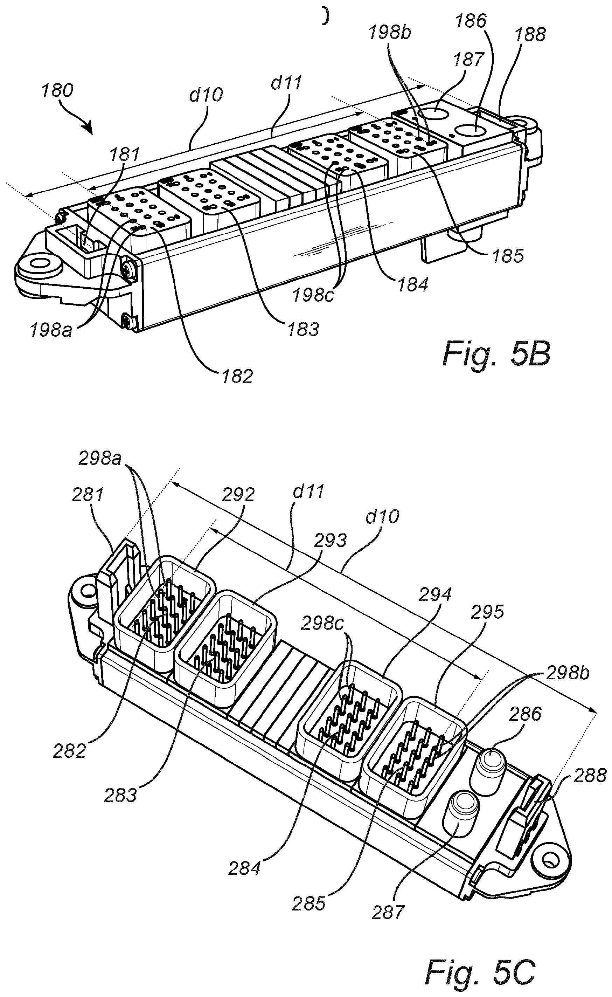

Fig. 5A shows a detailed view of the second electrical connector 280, being the electrical connector 280 of the self-propelled load bearing unit 200 according to the embodiment shown in the drawings. The electrical connector 280 comprises a first and second protruding mechanical connector 281, 288 configured to mechanically connect the electrical connector 280 of the self-propelled load bearing unit 200 to the electrical connector of the self-propelled guide unit 200. The electrical connector further comprises a plurality of pins for transferring electrical power and/or electrical signals. On the rights side of the connector 280 as illustrated in fig. 5A, two power pins 286 are located for transferring relatively large currents at 48V voltage for transferring power from the self-propelled guide unit 100 to the self-propelled load bearing unit 200 for powering the drive motors of the self-propelled load bearing unit 200. The electrical connector 280 further comprises a plurality of pins grouped in sections 282 - 285. Each section being enclosed by a mechanical guide element structure in the form of a protruding wall, configured to protect the pins and aid in the correct engagement between the first and second plurality of recesses or protrusions (or pins and sockets) and for further mechanically connecting and securing the electrical connector 280 of the self-propelled load bearing unit 200 to the electrical connector of the self-propelled guide unit 100. The sections or pins will be further described with reference to figs 5B and 5C.

Fig. 5B shows a detailed view of the first electrical connector 180, being the electrical connector 180 of the self-propelled guide unit 100. The electrical connector 180 comprises a first and second mechanical connector recess 181, 188 configured to receive the first and second protruding mechanical connectors (281, 288) of the electrical connector (280) of the self-propelled load bearing unit, for mechanically connecting the electrical connector 180 of the self-propelled guiding unit 100 to the electrical connector of the self-propelled load bearing unit. The electrical connector 180 further comprises a plurality of sockets or recesses for receiving the pins or protrusions of the electrical connector of the self-propelled load bearing unit for transferring electrical power and/or electrical signals between the self-propelled guide unit and the self-propelled load bearing unit. On the rights side of the connector 180 as illustrated in fig. 5B, two power sockets 186, 187 are located, for receiving the two power pins (286, 287) of the electrical connector of the self-propelled guide unit for transferring relatively large currents at 48V voltage, for transferring power from the self-propelled guide unit to the self-propelled load bearing unit for powering the drive motors of the self-propelled load bearing unit. The electrical connector 180 further comprises a plurality of pins grouped in sections 182 - 185. Each section 182 - 185 is protruding such that a recess is created around each of the sections 182 - 185 for receiving the protruding walls (292 - 295) enclosing and protecting the sections of pins of the electrical connector of the self-propelled guide unit.

The electrical connector 180 is fixedly fixated to a major portion of the self-propelled guide unit and as such configured to be indirectly actuated by the actuator when the actuator lifts the self-propelled guide unit, such that the electrical connector 180 vertically connects to the electrical connector (280) of the self-propelled load bearing unit.

Fig. 5C shows a detailed view of the electrical connector 280 of the self-propelled load bearing unit according to the embodiment shown in the drawings, when turned upside down relative to its positioning when fixated to the self-propelled load bearing unit (and relative to the view in fig. 5A). Just as shown in fig. 5A, the electrical connector 280 comprises a first and second protruding mechanical connector 281, 288 configured to mechanically connect the electrical connector 280 of the self-propelled load bearing unit to the electrical connector of the self-propelled guide unit. The electrical connector further comprises a plurality of pins for transferring electrical power and/or electrical signals. On the rights side of the connector 280 as illustrated in fig. 5C, two power pins 286, 287 are located for transferring relatively large currents at 48V voltage for transferring power from the self-propelled guide unit to the self-propelled load bearing unit for powering the drive motors of the self-propelled load bearing unit. The electrical connector 280 further comprises a plurality of pins grouped in sections 282 - 285. The electrical connector 280 further comprises a plurality of pins grouped in sections 282 - 285. Each section being enclosed by a mechanical guide element structure in the form of a protruding wall 292 - 295, configured to protect the pins and aid in the correct engagement between the first and second plurality of recesses or protrusions (or pins and sockets) and for further mechanically connecting and securing the electrical connector 280 of the self-propelled load bearing unit to the electrical connector of the self-propelled guide unit.

Referring now to figs. 5B and 5C. All the mechanical guide element of the self-propelled guide unit and the self-propelled load bearing unit helps to align the two electrical connectors 180, 280 such that the pins and sockets should be inserted properly, such that the transfer of electrical signals between the self-propelled guide unit and the self-propelled load bearing unit should be correct. To test that the communication and signal transfer between the self-propelled guide unit and the self-propelled load bearing unit works in accordance with the specification, the self-propelled guide unit sends out control signals on all active pins and expects a specific answer as proof of a correct connection of the pins and sockets.

To verify proper engagement of the pins and sockets, a method is used in which test signals are run on pins and socket connections on separated positions in the electrical connectors 180, 280. If a first pin and socket engagement is verified at a first position and a second pin and socket engagement is verified at a second position, the probability is high that the pin and socket engagements placed between the first and second positions are also correct. For this purpose, important communication between the self-propelled guide unit and the self-propelled load bearing unit may be placed at pins placed at relatively large distance from each other, such that it can be verified that such important communication works properly and as such that less important communication placed at pin and socket pairs placed between the pin and socket parts for the important communication also will work properly.

In the embodiments shown in the drawings, a first pair of recesses and protrusions 198a, 298a (pin and socket pairs) are configured to transfer a first type of communication, and a second pair of recesses and protrusions 198b, 298b (pin and socket pairs) are configured to transfer a second type of communication. The first and second pin and socket pairs 198a, 298a, 198b, 298b are spaced-apart such that at least one third pin and socket pairs (e.g. 198c, 298c) for communication is placed between the first and second pin and socket pairs 198a, 298a, 198b, 298b. In the embodiment shown in figs. 5B and 5C, the first and second pin and socket pairs 198a, 298a, 198b, 298b are spaced-apart with a distance d11 exceeding 20% of the width d10 of the first and second electrical connectors 180, 280, more specifically, exceeding 40% of the width d10 of the first and second electrical connector 180, 280, and more specifically exceeding 60% of the width d10 of the first and second electrical connector 180, 280. The width d10 of the electrical connectors 180, 280 being defined as the outer measurement of the recesses and protrusions having the longest distance in between themselves, i.e. the outer measurement between first mechanical connectors 181, 281 and the second mechanical connectors 188, 288.

In the embodiment shown in figs. 5B and 5C, the first and second pin and socket pairs 198a, 298a, 198b, 298b are spaced-apart with a distance d11 exceeding 5cm, more specifically exceeding 10cm.

As previously mentioned, the self-propelled guide unit is responsible for navigation, and guiding and propulsion of the self-propelled load bearing unit in the logistics system. This also mean that the self-propelled guide unit is responsible for the propulsion (acceleration and deacceleration) as well all safety features of the self-propelled guide unit and the self-propelled load bearing unit, such as contact or impact sensors, non-contact sensors (such as LIDAR and IR) and emergency stop signals. If the safety features are safety features implemented on the self-propelled load bearing unit, signals related to the safety features need to be transferred correctly to the self-propelled guide unit, such that the self-propelled guide unit can correctly control the propulsion of the self-propelled load bearing unit for example by deaccelerating the self-propelled load bearing unit if an obstacle or a human operator comes into the pathway of the self-propelled load bearing unit. For these safety features to function correctly, it is very important that the relevant electrical signals can be correctly transferred between the self-propelled load bearing unit and the self-propelled guide unit. If the first and second electrical connectors 180, 280 are erroneously connected to each other, this may result in an incorrect transfer of electrical signals which may compromise the safety of the system. To ensure that all electrical connections are functioning properly, test signals are transferred on all active electrical connections. Test signals are electrical signals transmitted on a specific pin and requiring a response in the form of a specific electrical signal on that, or on another, pin. In the embodiments shown in the figures, control signals are configured to be transferred between the self-propelled load bearing unit and the self-propelled guide unit on at least a first and second pin and socket (or recesses and protrusion) with a frequency exceeding 1Hz, preferably exceeding 10Hz and most preferably exceeding 100Hz, such that verification of correct connection is performed more than 1 time per second, preferably more than 10 times per second and most preferably more than 100 times per second. The pins and sockets over which correct electrical connection is verified could be configured to transfer navigation data, control signals or electrical power. Navigation data could be data from the navigation sensors, information about the surroundings received by the self-propelled guide unit, information concerning the movement of the drive wheels of the self-propelled load bearing unit obtained from the motors of the self-propelled load bearing unit or obtained from encoders connected to the drive wheels. Navigation information could also be an emergency stop signal generated by an operator pushing an emergency stop button located on the self-propelled load bearing unit.

In the embodiment shown in figs. 5B and 5C, the first and second pin and socket pairs 198a, 298a, 198b, 298b are configured to perform the verification using the control signals, and the first and second pin and socket pairs 198a, 298a, 198b, 298b are spaced-apart with a distance d11 exceeding 20% of the width d10 of the first and second electrical connectors 180, 280, more specifically, exceeding 40% of the width d10 of the first and second electrical connector 180, 280, and more specifically exceeding 60% of the width d10 of the first and second electrical connector 180, 280. More specifically, the first and second pin and socket pairs 198a, 298a, 198b, 298b are spaced-apart with a distance d11 exceeding 5cm, more specifically exceeding 10cm.

Fig. 6 shows the self-propelled guide unit 100 according to the embodiment described with reference to figs. 1A - 2 and 4A- 4C in an elevated view from the left, when the front cover has been removed. With the front cover removed, it is shown how the engaging elements 171 - 174 are fixated to a moving frame 140 which is actuated by the actuator 141, which in the embodiment shown in fig. 6 is a cylindrical, electrical linear actuator comprising an electrical motor and a threaded member for transforming a rotational force to a linear force. The actuator 141 is configured to pull the moving frame 140 downwards and thus move the engaging members 171-174 downwards which, when the engaging members 171-174 are in engagement with the engaging members of the self-propelled load bearing unit, lifts the self-propelled guide unit 100 from the floor surface. The moving frame 140 is further connected to a threaded override shaft 142, which exists the frame of the self-propelled guide unit 100 on the roof of the self-propelled guide unit 100 and connects to a hexagonal protrusion 143 which may be operated in an emergency mode for rotating the override shaft 142 in case of a loss of power and thereby displace the moving frame 140 up and down to disconnect the self-propelled guide unit 100 from the self-propelled load bearing unit.

Fig. 6 further shows the electrical connector 180 for vertically and electrically connecting the self-propelled guide unit 100 to the self-propelled load bearing unit such that sensor signals and ID-information can be transferred from the self-propelled load bearing unit to the self-propelled guide unit 100 and electrical power and control signals can be transferred from the self-propelled guide unit 100 to the self-propelled load bearing unit. The electrical connector 180 is described in further detail with reference to figs 5A - 5C.

The self-propelled guide unit 100 shown in fig. 6 further comprising a control unit C for controlling the actuation of engaging elements 171 - 174 and the first electrical connector 180. The control unit is configured to control the actuation of the engaging elements 171 - 174 such that the engaging elements 171-174 engages the engaging elements of the self-propelled load bearing unit before the first electrical connector 180 engages the second electrical connector (280) on the self-propelled load bearing unit, such that the actuation of the engaging elements 171 - 174 aligns the first electrical connector 180 and the second electrical connector before the first electrical connector 180 engages the second electrical connector.

Fig. 7 shows the self-propelled load bearing unit 200 according to the embodiment described with reference to figs. 1A- 1B, 3 and 4A - 4C in an elevated view from the right, when the rear cover has been removed. With the rear cover removed, it is shown how the engaging elements 171 - 174 of the self-propelled load bearing unit 200 are fixated to a frame portion 240 such that the weight from the self-propelled guide unit is transferred from the engagement elements 271 - 274 to the self-propelled load bearing unit 200 when the self-propelled guide unit hangs on the self-propelled load bearing unit 200.

Fig. 7 further shows the electrical connector 280 for vertically and electrically connecting the self-propelled guide unit to the self-propelled load bearing unit 200 such that sensor signals and ID-information can be transferred from the self-propelled load bearing unit 200 to the self-propelled guide unit and electrical power and control signals can be transferred from the self-propelled guide unit to the self-propelled load bearing unit 200. The electrical connector 280 is described in further detail with reference to figs 5A - 5C.

Variations to the disclosed embodiments can be understood and effected by the skilled person in practicing the invention, as defined in the appended claims.

## Claims

1. A self-propelled guide unit (100) configured to connect to and guide a self-propelled load bearing unit (200), such that the self-propelled load bearing unit (200) can travel on a floor surface when the self-propelled guide unit (100) and the self-propelled load bearing unit (200) are connected, and wherein a floor contacting plane (P) is defined by wheel portions of the self-propelled guide unit (100) configured to engage the floor surface when the self-propelled guide unit (100) travels on the floor surface, the self-propelled guide unit (100) being configured to:
receive at least one parameter from the self-propelled load bearing unit (200),
use the at least one parameter in the generation of a control signal, and
transmit the generated control signal to the self-propelled load bearing unit (200) for controlling the propulsion of the self-propelled load bearing unit (200), the self-propelled guide unit (100) comprises:
at least two engaging elements (171, 172, 173, 174) each configured to engage a corresponding engaging element (271, 272, 273, 274) on the self-propelled load bearing unit (200), and
an actuator (141) connected to the at least two engaging elements (171, 172, 173, 174) **characterized in that** the actuator is configured to move the at least two engaging elements in a direction towards the floor surface,
wherein
the at least two engaging elements (171, 172, 173, 174) are configured to engage corresponding engaging elements (271, 272, 273, 274) of the self-propelled load bearing unit (200) by being moved by the actuator,
the at least two engaging elements (171, 172, 173, 174), after engagement with the at least one engaging element (271, 272, 273, 274) of the self-propelled load bearing unit (200), are configured to lift the self-propelled guide unit (100) from the floor surface by the at least two engaging elements (171, 172, 173, 174) being moved by the actuator, such that the at least two engaging elements (171, 172, 173, 174) carry a major portion of the weight of the self-propelled guide unit (100), when the self-propelled guide unit (100) is lifted from the floor surface, and
the at least two engaging elements (171, 172, 173, 174) are vertically spaced apart in a direction perpendicular to the floor contacting plane (P).

2. The self-propelled guide unit (100) according to claim 1, wherein the at least two engaging elements (171, 172, 173, 174) on the self-propelled guide unit (100) comprises a protrusion configured to engage a corresponding recess on the self-propelled load bearing unit (200).

3. The self-propelled guide unit (100) according to claim 2, wherein the protrusion is a hook.

4. The self-propelled guide unit (100) according to any one of claims 1 - 3, wherein the at least two engaging elements (171, 172, 173, 174) on the self-propelled guide unit (100) are configured to stabilize the self-propelled guide unit (100) in at least a first and second direction when the self-propelled guide unit (100) is connected to the self-propelled load bearing unit (200), wherein the first and second directions are:
perpendicular to a direction towards the floor surface, and
opposite to each other.

5. The self-propelled guide unit (100) according to any one of claims 1 - 4, wherein the at least two engaging elements (171, 172, 173, 174) are horizontally spaced apart in a direction parallel to the floor contacting plane.

6. The self-propelled guide unit (100) according to claim 1 - 5, wherein the self-propelled guide unit (100) is configured to engage the self-propelled load bearing unit (200) along an engagement axis (LA), for positioning the self-propelled guide unit (100) relative to the self-propelled load bearing unit (200) in a position enabling the connection between the self-propelled guide unit (100) and the self-propelled load bearing unit (200), and wherein the self-propelled guide unit (100) has a maximum width (d5) at the widest portion of the self-propelled guide unit (100), in a horizontal direction perpendicular to the engagement axis (LA), and wherein, the at least two engaging elements (171, 172, 173, 174) are spaced apart with a distance (d2) exceeding 20% of the maximum width (d5).

7. The self-propelled guide unit (100) according to any one of the preceding claims, wherein the at least two engaging elements (171, 172, 173, 174) are positioned vertically above the center of gravity of the self-propelled guide unit (100), when the self-propelled guide unit (100) travels on the floor surface.

8. The self-propelled guide unit (100) according to any one of the preceding claims, further comprising a first electrical connector (180) configured to connect to a second electrical connector (280) comprised by the self-propelled load bearing unit (200), wherein the first electrical connector (180) is configured to be moved by the actuator (141) after the actuator (141) has moved the at least two engaging elements (171, 172, 173, 174).

9. The self-propelled guide unit (100) according to claim 8, wherein the first electrical connector (180) is configured to be moved, relative to the second electrical connector (280), by the actuator (141) in a direction opposite to a direction towards the floor surface.

10. A self-propelled load bearing unit (200) configured to connect to and be guided by a self-propelled guide unit (100), such that the self-propelled load bearing unit (200) can travel on a floor surface when the self-propelled guide unit (100) and the self-propelled load bearing unit (200) are connected, and wherein a floor contacting plane (P) is defined by wheel portions of the self-propelled load bearing unit (200) configured to engage the floor surface when the self-propelled load bearing unit (200) travels on the floor surface, the self-propelled load bearing unit (200) being configured to:
transmit at least one parameter for use in the generation of a control signal by the self-propelled guide unit (100),
receive the generated control signal from the self-propelled guide unit (100), the control signal being configured for controlling the propulsion of the self-propelled load bearing unit (200), the self-propelled load bearing unit (200) comprises:
at least two engaging elements (271, 272, 273, 274) configured to engage at least two corresponding engaging elements (171, 172, 173, 174) on the self-propelled guide unit (100),
**characterized in that**
the at least two engaging elements (271, 272, 273, 274), after each being placed in engagement with a corresponding engaging element (171, 172, 173, 174) of the self-propelled guide unit (100), are configured to carry a major portion of the weight of the self-propelled guide unit (100), when the self-propelled guide unit hangs on the at least two engaging elements (271, 272, 273, 274) of the self-propelled load bearing unit (200), and
the at least two engaging elements (271, 272, 273, 274) are vertically spaced apart in a direction perpendicular to the floor contacting plane (P).

11. The self-propelled load bearing unit (200) according to claim 10, wherein the at least two engaging elements (271, 272, 273, 274) on the self-propelled load bearing unit (200) comprises a recess configured to engage a corresponding protrusion on the self-propelled guide unit (100).

12. The self-propelled load bearing unit (200) according to any one of claims 10 and 11, wherein the at least two engaging elements (271, 272, 273, 274) are vertically aligned on a common axis parallel to the floor contacting plane (P).

13. The self-propelled load bearing unit (200) according to any one of claims 10 - 12, further comprising a receiving portion (232) configured to receive at least a portion of the self-propelled guide unit (100), such that the receiving portion (232) encloses three sides of at least the portion of the self-propelled guide unit (100).

14. The self-propelled load bearing unit (200) according to any one of claims 10 - 13, further comprising a mechanical guide element (234) configured to guide the self-propelled guide unit (100) to enter the receiving portion (232).

15. A system for intralogistics comprising a self-propelled guide unit (100) according to any one of claims 1- 9, and at least one self-propelled load bearing unit (200) according to any one of claims 10 - 14.

## Patentansprüche

1. Selbstgetriebenes Führungsfahrzeug (100), das dazu ausgelegt ist, mit einen selbstgetriebenen lasttragenden Fahrzeug (200) verbunden zu werden und dieses zu führen, sodass das selbstgetriebene lasttragende Fahrzeug (200) auf einer Bodenoberfläche bewegt werden kann, wenn das selbstgetriebene Führungsfahrzeug (100) und das selbstgetriebene lasttragende Fahrzeug (200) verbunden sind; und wobei eine Bodenkontaktebene (P) durch Radabschnitte des selbstgetriebenen Führungsfahrzeugs (100) definiert ist, dazu ausgelegt, in Eingriff mit der Bodenoberfläche zu kommen, wenn das selbstgetriebene Führungsfahrzeug (100) auf der Bodenoberfläche fährt, wobei das selbstgetriebene Führungsfahrzeug (100) ausgelegt ist zum:
Empfangen mindestens eines Parameters von dem selbstgetriebenen lasttragenden Fahrzeug (200),
Verwenden des mindestens einen Parameters zur Erzeugung eines Steuersignals, und
Senden des erzeugten Steuersignals an das selbstgetriebene lasttragende Fahrzeug (200) zur Steuerung des Antriebs des selbstgetriebenen lasttragenden Fahrzeugs (200), wobei das selbstgetriebene lasttragende Fahrzeug (100) Folgendes umfasst:
mindestens zwei Eingriffselemente (171, 172, 173, 174), die jeweils dazu ausgelegt sind, mit einem entsprechenden Eingriffselement (271, 272, 273, 274) am selbstgetriebenen lasttragenden Fahrzeug (200) in Eingriff zu kommen, und
einen Aktuator (141), der mit den mindestens zwei Eingriffselementen (171, 172, 173, 174) verbunden ist, **dadurch gekennzeichnet, dass** der Aktuator dazu ausgelegt ist, die mindestens zwei Eingriffselemente in einer Richtung hin zur Bodenoberfläche zu bewegen,
wobei
die mindestens zwei Eingriffselemente (171, 172, 173, 174) dazu ausgelegt sind, mit entsprechenden Eingriffselementen (271, 272, 273, 274) des selbstgetriebenen lasttragenden Fahrzeugs (200) in Eingriff zu kommen, indem sie durch den Aktuator bewegt werden,
die mindestens zwei Eingriffselemente (171, 172, 173, 174), nach dem Ineingriffkommen mit dem mindestens einen Eingriffselement (271, 272, 273, 274) des selbstgetriebenen lasttragenden Fahrzeugs (200), dazu ausgelegt sind, das selbstgetriebene Führungsfahrzeug (100) von der Bodenoberfläche anzuheben, indem die mindestens zwei Eingriffselemente (171, 172, 173, 174) durch den Aktuator bewegt werden, so dass die mindestens zwei Eingriffselemente (171, 172, 173, 174) einen Großteil des Gewichts des selbstgetriebenen Führungsfahrzeugs (100) tragen, wenn das selbstgetriebene Führungsfahrzeug (100) vom Boden angehoben ist, und
die mindestens zwei Eingriffselemente (171, 172, 173, 174) in einer Richtung senkrecht zur Bodenkontaktebene (P) vertikal beabstandet sind.

2. Selbstgetriebenes Führungsfahrzeug (100) nach Anspruch 1, wobei die mindestens zwei Eingriffselemente (171, 172, 173, 174) am selbstgetriebenen Führungsfahrzeug (100) einen Vorsprung aufweisen, der dazu ausgelegt ist, mit einer entsprechenden Aussparung an dem selbstgetriebenen lasttragenden Fahrzeug (200) in Eingriff zu kommen.

3. Selbstgetriebenes Führungsfahrzeug (100) nach Anspruch 2, wobei der Vorsprung ein Haken ist.

4. Selbstgetriebenes Führungsfahrzeug (100) nach einem der Ansprüche 1 - 3, wobei die mindestens zwei Eingriffselemente (171, 172, 173, 174) an dem selbstgetriebenen Führungsfahrzeug (100) dazu ausgelegt sind, das selbstgetriebene Führungsfahrzeug (100) in mindestens einer ersten und zweiten Richtung zu stabilisieren, wenn das selbstgetriebene Führungsfahrzeug (100) mit dem selbstgetriebenen lasttragenden Fahrzeug (200) verbunden ist, wobei die erste und zweite Richtung:
senkrecht zu einer Richtung hin zur Bodenoberfläche sind, und
einander entgegengesetzt sind.

5. Selbstgetriebenes Führungsfahrzeug (100) nach einem der Ansprüche 1 - 4, wobei die mindestens zwei Eingriffselemente (171, 172, 173, 174) horizontal in einer Richtung parallel zur Bodenkontaktebene angeordnet sind.

6. Selbstgetriebenes Führungsfahrzeug (100) nach Anspruch 1 - 5, wobei das selbstgetriebene Führungsfahrzeug (100) dazu ausgelegt ist, mit dem selbstgetriebenen lasttragenden Fahrzeug (200) entlang einer Eingriffsachse (LA) in Eingriff zu kommen, um das selbstgetriebene Führungsfahrzeug (100) relativ zum selbstgetriebenen lasttragenden Fahrzeug (200) in einer Position zu positionieren, die die Verbindung zwischen dem selbstgetriebenen Führungsfahrzeug (100) und dem selbstgetriebenen lasttragenden Fahrzeug (200) ermöglicht, und wobei das selbstgetriebene Führungsfahrzeug (100) eine maximale Breite (d5) am breitesten Teil des selbstgetriebenen Führungsfahrzeugs (100) in horizontaler Richtung senkrecht zur Eingriffsachse (LA) aufweist und wobei die mindestens zwei Eingriffselemente (171, 172, 173, 174) mit einem Abstand (d2) größer als 20 % der maximalen Breite (d5) voneinander beabstandet sind.

7. Selbstgetriebenes Führungsfahrzeug (100) nach einem der vorhergehenden Ansprüche, wobei die mindestens zwei Eingriffselemente (171, 172, 173, 174) vertikal über dem Schwerpunkt des selbstgetriebenen Führungsfahrzeugs (100) positioniert sind, wenn das selbstgetriebene Führungsfahrzeug (100) auf der Bodenoberfläche fährt.

8. Selbstgetriebenes Führungsfahrzeug (100) nach einem der vorhergehenden Ansprüche, ferner umfassend einen ersten elektrischen Verbinder (180), der dazu ausgelegt ist, sich mit einem zweiten elektrischen Verbinder (280) zu verbinden, der im selbstgetriebenen lasttragenden Fahrzeug (200) enthalten ist, wobei der erste elektrische Verbinder (180) dazu ausgelegt ist, durch den Aktuator (141) bewegt zu werden, nachdem der Aktuator (141) die mindestens zwei Eingriffselemente (171, 172, 173, 174) bewegt hat.

9. Selbstgetriebenes Führungsfahrzeug (100) nach Anspruch 8, wobei der erste elektrische Verbinder (180) dazu ausgelegt ist, relativ zum zweiten elektrischen Verbinder (280) durch den Aktuator (141) in eine Richtung verschoben zu werden, die einer Richtung hin zur Bodenoberfläche entgegengesetzt ist.

10. Selbstgetriebenes lasttragendes Fahrzeug (200), das dazu ausgelegt ist, mit einem selbstgetriebenen Führungsfahrzeug (100) verbunden und von diesem geführt zu werden, sodass das selbstgetriebene lasttragende Fahrzeug (200) auf einer Bodenoberfläche fahren kann, wenn das selbstgetriebene Führungsfahrzeug (100) und das selbstgetriebene lasttragende Fahrzeug (200) miteinander verbunden sind, und wobei eine Bodenkontaktebene (P) durch Radabschnitte des selbstgetriebenen lasttragenden Fahrzeugs (200) definiert ist, dazu ausgelegt, mit der Bodenoberfläche in Eingriff zu kommen, wenn das selbstgetriebene lasttragende Fahrzeug (200) auf der Bodenoberfläche fährt, wobei das selbstgetriebene lasttragende Fahrzeug (200) ausgelegt ist zum:
Senden mindestens eines Parameters zur Verwendung bei der Erzeugung eines Steuersignals durch das selbstgetriebene Führungsfahrzeug (100),
Empfangen des erzeugten Steuersignals vom selbstgetriebenen Führungsfahrzeug (100), wobei das Steuersignal für die Steuerung des Antriebs des selbstgetriebenen lasttragenden Fahrzeugs (200) ausgelegt ist, wobei das selbstgetriebene lasttragende Fahrzeug (200) Folgendes umfasst:
mindestens zwei Eingriffselemente (271, 272, 273, 274), die dazu ausgelegt sind, mit mindestens zwei entsprechenden Eingriffselementen (171, 172, 173, 174) an dem selbstgetriebenen Führungsfahrzeug (100) in Eingriff zu kommen,
**dadurch gekennzeichnet, dass**
die mindestens zwei Eingriffselemente (271, 272, 273, 274), nachdem sie jeweils in Eingriff mit einem entsprechenden Eingriffselement (171, 172, 173, 174) des selbstgetriebenen Führungsfahrzeugs (100) gebracht wurden, dazu ausgelegt sind, einen Großteil des Gewichts des selbstgetriebenen Führungsfahrzeugs (100) zu tragen, wenn das selbstgetriebene Führungsfahrzeug an den mindestens zwei Eingriffselementen (271, 272, 273, 274) des selbstgetriebenen lasttragenden Fahrzeugs (200) hängt, und
die mindestens zwei Eingriffselemente (271, 272, 273, 274) in einer Richtung senkrecht zur Bodenkontaktebene (P) vertikal beabstandet sind.

11. Selbstgetriebenes lasttragendes Fahrzeug (200) nach Anspruch 10, wobei die mindestens zwei Eingriffselemente (271, 272, 273, 274) an dem selbstgetriebenen lasttragenden Fahrzeug (200) eine Aussparung aufweisen, die dazu ausgelegt ist, mit einem entsprechenden Vorsprung am selbstgetriebenen Führungsfahrzeug (100) in Eingriff zu kommen.

12. Selbstgetriebenes lasttragendes Fahrzeug (200) nach einem der Ansprüche 10 und 11, wobei die mindestens zwei Eingriffselemente (271, 272, 273, 274) vertikal auf einer gemeinsamen Achse parallel zur Bodenkontaktebene (P) ausgerichtet sind.

13. Selbstgetriebenes lasttragendes Fahrzeug (200) nach einem der Ansprüche 10 - 12, ferner umfassend einen Aufnahmeabschnitt (232), der dazu ausgelegt ist, mindestens einen Abschnitt des selbstgetriebenen Führungsfahrzeugs (100) aufzunehmen, sodass der Aufnahmeabschnitt (232) drei Seiten zumindest des Abschnitts des selbstgetriebenen Führungsfahrzeugs (100) umschließt.

14. Selbstgetriebenes lasttragendes Fahrzeug (200) nach einem der Ansprüche 10 - 13, ferner umfassend ein mechanisches Führungselement (234), das dazu ausgelegt ist, das selbstgetriebene Führungsfahrzeug (100) zum Eintritt in den Aufnahmeabschnitt (232) zu führen.

15. System für Intralogistik, umfassend ein selbstgetriebenes Führungsfahrzeug (100) nach einem der Ansprüche 1 - 9 und mindestens ein selbstgetriebenes lasttragendes Fahrzeug (200) nach einem der Ansprüche 10 - 14.

## Revendications

1. Unité de guidage autopropulsée (100) configurée pour se connecter à et guider une unité de porte-charge autopropulsée (200), de telle sorte que l'unité de porte-charge autopropulsée (200) peut circuler sur une surface de sol lorsque l'unité de guidage autopropulsée (100) et l'unité de porte-charge autopropulsée (200) sont connectées, et dans laquelle un plan de contact avec le sol (P) est défini par des parties roues de l'unité de guidage autopropulsée (100) configurées pour se mettre en prise avec la surface de sol lorsque l'unité de guidage autopropulsée (100) circule sur la surface de sol, l'unité de guidage autopropulsée (100) étant configurée pour :
recevoir au moins un paramètre en provenance de l'unité de porte-charge autopropulsée (200),
utiliser l'au moins un paramètre dans la génération d'un signal de commande, et
transmettre le signal de commande généré à l'unité de porte-charge autopropulsée (200) pour commander la propulsion de l'unité de porte-charge autopropulsée (200), l'unité de guidage autopropulsée (100) comprend :
au moins deux éléments de mise en prise (171, 172, 173, 174) chacun configurés pour se mettre en prise avec un élément de mise en prise (271, 272, 273, 274) correspondant sur l'unité de porte-charge autopropulsée (200), et
un actionneur (141) connecté aux au moins deux éléments de mise en prise (171, 172, 173, 174) **caractérisé en ce que** l'actionneur est configuré pour déplacer les au moins deux éléments de mise en prise dans une direction vers la surface de sol,
dans laquelle
les au moins deux éléments de mise en prise (171, 172, 173, 174) sont configurés pour se mettre en prise avec des éléments de mise en prise (271, 272, 273, 274) correspondants de l'unité de porte-charge autopropulsée (200) en étant déplacés par l'actionneur,
les au moins deux éléments de mise en prise (171, 172, 173, 174), après mise en prise avec l'au moins un élément de mise en prise (271, 272, 273, 274) de l'unité de porte-charge autopropulsée (200), sont configurés pour soulever l'unité de guidage autopropulsée (100) de la surface de sol par déplacement des au moins deux éléments de mise en prise (171, 172, 173, 174) par l'actionneur, de telle sorte que les au moins deux éléments de mise en prise (171, 172, 173, 174) portent une majeure partie du poids de l'unité de guidage autopropulsée (100), lorsque l'unité de guidage autopropulsée (100) est soulevée de la surface de sol, et
les au moins deux éléments de mise en prise (171, 172, 173, 174) sont espacés verticalement dans une direction perpendiculaire au plan de contact avec le sol (P).

2. Unité de guidage autopropulsée (100) selon la revendication 1, dans laquelle les au moins deux éléments de mise en prise (171, 172, 173, 174) sur l'unité de guidage autopropulsée (100) comprennent une saillie configurée pour se mettre en prise avec un évidement correspondant sur l'unité de porte-charge autopropulsée (200).

3. Unité de guidage autopropulsée (100) selon la revendication 2, dans laquelle la saillie est un crochet.

4. Unité de guidage autopropulsée (100) selon l'une quelconque des revendications 1 à 3, dans laquelle les au moins deux éléments de mise en prise (171, 172, 173, 174) sur l'unité de guidage autopropulsée (100) sont configurés pour stabiliser l'unité de guidage autopropulsée (100) dans au moins une première et une deuxième directions lorsque l'unité de guidage autopropulsée (100) est connectée à l'unité de porte-charge autopropulsée (200), dans laquelle les première et deuxième directions sont :
perpendiculaires à une direction vers la surface de sol, et
opposées l'une à l'autre.

5. Unité de guidage autopropulsée (100) selon l'une quelconque des revendications 1 à 4, dans laquelle les au moins deux éléments de mise en prise (171, 172, 173, 174) sont espacés horizontalement dans une direction parallèle au plan de contact avec le sol.

6. Unité de guidage autopropulsée (100) selon les revendications 1 à 5, dans laquelle l'unité de guidage autopropulsée (100) est configurée pour se mettre en prise avec l'unité de porte-charge autopropulsée (200) le long d'un axe de mise en prise (LA), pour positionner l'unité de guidage autopropulsée (100) relativement à l'unité de porte-charge autopropulsée (200) dans une position permettant la connexion entre l'unité de guidage autopropulsée (100) et l'unité de porte-charge autopropulsée (200), et dans laquelle l'unité de guidage autopropulsée (100) a une largeur maximale (d5) au niveau de la partie la plus large de l'unité de guidage autopropulsée (100), dans une direction horizontale perpendiculaire à l'axe de mise en prise (LA), et dans laquelle, les au moins deux éléments de mise en prise (171, 172, 173, 174) sont espacés d'une distance (d2) supérieure à 20 % de la largeur maximale (d5).

7. Unité de guidage autopropulsée (100) selon l'une quelconque des revendications précédentes, dans laquelle les au moins deux éléments de mise en prise (171, 172, 173, 174) sont positionnés verticalement au-dessus du centre de gravité de l'unité de guidage autopropulsée (100), lorsque l'unité de guidage autopropulsée (100) circule sur la surface de sol.

8. Unité de guidage autopropulsée (100) selon l'une quelconque des revendications précédentes, comprenant en outre un premier connecteur électrique (180) configuré pour se connecter à un deuxième connecteur électrique (280) constitué par l'unité de porte-charge autopropulsée (200), dans laquelle le premier connecteur électrique (180) est configuré pour être déplacé par l'actionneur (141) après que l'actionneur (141) a déplacé les au moins deux éléments de mise en prise (171, 172, 173, 174).

9. Unité de guidage autopropulsée (100) selon la revendication 8, dans laquelle le premier connecteur électrique (180) est configuré pour être déplacé, relativement au deuxième connecteur électrique (280), par l'actionneur (141) dans une direction opposée à une direction vers la surface de sol.

10. Unité de porte-charge autopropulsée (200) configurée pour être connectée à et guidée par une unité de guidage autopropulsée (100), de telle sorte que l'unité de porte-charge autopropulsée (200) peut circuler sur une surface de sol lorsque l'unité de guidage autopropulsée (100) et l'unité de porte-charge autopropulsée (200) sont connectées, et dans laquelle un plan de contact avec le sol (P) est défini par des parties roues de l'unité de porte-charge de charge autopropulsée (200) configurées pour se mettre en prise avec la surface de sol lorsque l'unité de porte-charge de charge autopropulsée (200) circule sur la surface de sol, l'unité de porte-charge de charge autopropulsée (200) étant configurée pour :
transmettre au moins un paramètre à utiliser dans la génération d'un signal de commande par l'unité de guidage autopropulsée (100),
recevoir le signal de commande généré en provenance de l'unité de guidage autopropulsée (100), le signal de commande étant configuré pour commander la propulsion de l'unité de porte-charge autopropulsée (200), l'unité de porte-charge autopropulsée (200) comprend :
au moins deux éléments de mise en prise (271, 272, 273, 274) configurés pour se mettre en prise avec au moins deux éléments de mise en prise (171, 172, 173, 174) correspondants sur l'unité de guidage autopropulsée (100),
**caractérisée en ce que**
les au moins deux éléments de mise en prise (271, 272, 273, 274), après avoir chacun été placés en prise avec un élément de mise en prise (171, 172, 173, 174) correspondant de l'unité de guidage autopropulsée (100), sont configurés pour porter une majeure partie du poids de l'unité de guidage autopropulsée (100), lorsque l'unité de guidage autopropulsée est accrochée aux au moins deux éléments de mise en prise (271, 272, 273, 274) de l'unité de porte-charge autopropulsée (200), et
les au moins deux éléments de mise en prise (271, 272, 273, 274) sont espacés verticalement dans une direction perpendiculaire au plan de contact avec le sol (P).

11. Unité de porte-charge autopropulsée (200) selon la revendication 10, dans laquelle les au moins deux éléments de mise en prise (271, 272, 273, 274) sur l'unité de porte-charge autopropulsée (200) comprennent un évidement configuré pour se mettre en prise avec une saillie correspondante sur l'unité de guidage autopropulsée (100).

12. Unité de porte-charge autopropulsée (200) selon l'une quelconque des revendications 10 et 11, dans laquelle les au moins deux éléments de mise en prise (271, 272, 273, 274) sont alignés verticalement sur un axe commun parallèle au plan de contact avec le sol (P).

13. Unité de porte-charge autopropulsée (200) selon l'une quelconque des revendications 10 à 12, comprenant en outre une partie de réception (232) configurée pour recevoir au moins une partie de l'unité de guidage autopropulsée (100), de telle sorte que la partie de réception (232) enferme trois côtés d'au moins la partie de l'unité de guidage autopropulsée (100).

14. Unité de porte-charge autopropulsée (200) selon l'une quelconque des revendications 10 à 13, comprenant en outre un élément de guidage mécanique (234) configuré pour guider l'unité de guidage autopropulsée (100) afin qu'elle pénètre dans la partie de réception (232).

15. Système d'intralogistique comprenant une unité de guidage autopropulsée (100) selon l'une quelconque des revendications 1 à 9, et au moins une unité de porte-charge autopropulsée (200) selon l'une quelconque des revendications 10 à 14.
